# FASCICULE DE BREVET EUROPEEN

(11) **EP 3 903 364 B1**
(45) Date de publication et mention de la délivrance du brevet: **16.11.2022**
(21) Numéro de dépôt: 19828780.7
(22) Date de dépôt: 23.12.2019
(51) Int. Cl.: H01M 10/052, H01M 10/058, H01M 10/625, H01M 10/653, H01M 10/6568, H01M 10/6555, H01M 10/643, H01M 10/613, H01M 10/658, H01M 50/20, H01M 50/24

(54) **MODULE DE BATTERIE ELECTRIQUE ET BATTERIE COMPORTANT AU MOINS UN TEL MODULE**
ELEKTRISCHES BATTERIEMODUL UND BATTERIE MIT MINDESTENS EINEM SOLCHEN MODUL
ELECTRIC BATTERY MODULE AND BATTERY COMPRISING AT LEAST ONE SUCH MODULE

(30) Priorité: 28.12.2018 FR 1874281
(43) Date de publication de la demande: 03.11.2021
(73) Titulaire: Sogefi Air & Cooling (SAS), 78280 Guyancourt (FR)
(72) Inventeur: BECKER, Nicolas, 68320 PORTE-DU-RIED (FR); COLIN, Boris, 68370 ORBEY (FR)
(74) Mandataire: Cabinet Nuss
(86) Numéro de dépôt international: PCT/EP2019/086906
(87) Numéro de publication internationale: WO 2020/136160

(56) Documents cités:
- EP-A2- 2 362 463
- DE-A1-102010 045 707
- FR-A1- 3 062 521
- FR-A3- 2 988 915

## Description

La présente invention concerne le domaine du stockage d'énergie électrique, plus particulièrement celui des batteries électriques comprenant une pluralité d'accumulateurs individuels, notamment des batteries pour véhicules automobiles, et a pour objets un module de batterie et une batterie comprenant au moins un tel module.

De nombreuses batteries, notamment de grande autonomie et de forte puissance, en particulier les batteries embarquées des véhicules automobiles thermiques, hybrides ou électriques, sont actuellement constituées d'une multitude d'éléments de batterie individuels (accumulateurs élémentaires), en particulier du type Li-ion ou Li-polymère.

Chacun de ces éléments se présente de manière standard sous la forme d'un cylindre étanche et isolé électriquement, pourvu de bornes de connexion à ses extrémités opposées ou au niveau d'une extrémité. Ils sont, en vue de leur maintien fixe à l'état monté, reliés entre eux, généralement par collage ou résinage, en barrettes ou en blocs, sur un ou plusieurs étage(s).

Toutefois, un tel assemblage serré avec un matériau liant présente des inconvénients.

Ainsi, lorsque leur nombre est important, la surchauffe (du fait d'un courtcircuit ou d'un dysfonctionnement) d'un élément peut endommager toute la batterie par contamination et amplification du fait du confinement. En outre, une régulation en température des éléments internes d'un tel bloc par ventilation naturelle est problématique, voire impossible. De plus, en cas de défaillance d'un élément d'un bloc, tout le bloc doit être changé. Enfin, la tenue dans le temps de l'assemblage matière dans des conditions climatiques exigeantes et/ou dans un environnement vibratoire sévère est sujette à caution et la qualité de réalisation de l'assemblage peut être douteuse et variable.

Pour tenter de surmonter ces inconvénients, des moyens d'assemblage mécanique des éléments entre eux, dans un boîtier de protection, ont été proposés. EP2362463 divulgue un module de batterie électrique, conformément au préambule de la revendication 1.

Toutefois, de manière générale, ces solutions connues mettent en œuvre un nombre important de pièces de maintien séparées, nécessitent une enveloppe extérieure résistante et apte à reprendre les contraintes internes, mettent en œuvre des opérations de montage fastidieuses et/ou ne sont pas conçues dans le but d'une régulation thermique efficace de tous les éléments, ni d'une protection de la majorité des éléments en cas de défaillance d'un seul.

Le problème posé à l'invention consiste par conséquent, en premier lieu, à proposer une réalisation de batterie simple dans laquelle les éléments sont, de manière individuelle, maintenus solidement en place, sans liaison matière ou collage entre eux, et avantageusement protégés en cas de défaillance de l'un d'entre eux, ce à l'aide de moyens mécaniques seulement.

De plus, la réalisation proposée devrait fournir une régulation thermique améliorée par rapport aux solutions connues, sans complexifier la construction et sans nécessiter de ventilation forcée.

Enfin, la réalisation proposée devrait pouvoir être aisément déclinable dans des formats de batterie de taille et de puissance variables, et être simple à fabriquer, avec des composants de base identiques et un processus d'assemblage similaire, préférentiellement en deux phases d'agrégation successives, ce quel que soit le format de batterie final.

Au moins le principal problème ci-dessus est résolu par l'invention grâce à un module de batterie électrique, en particulier de batterie pour véhicule automobile, comprenant une pluralité d'accumulateurs individuels sous la forme d'éléments ou de cellules de batterie, de constitution allongée, avantageusement cylindrique, et préférentiellement à section circulaire, ces éléments de batterie étant reliés électriquement entre eux et aux bornes de connexion du module et montés dans un contenant faisant partie dudit module,
module de batterie caractérisé en ce que ledit contenant comprend :
- au moins un corps support définissant une pluralité de logements allongés, parallèles entre eux et configurés en forme de rainures ou de canaux pour recevoir chacun une rangée d'éléments de batterie avec leurs axes longitudinaux perpendiculaires au fond du logement concerné,
- des premiers éléments de calage sous la forme de pièces ajourées en forme d'échelles ou de cadres comprenant des longerons et des barreaux, disposées contre et entre les éléments de batterie d'une rangée et chacune des deux parois latérales du logement allongé les recevant, et dont chaque barreau est situé entre deux éléments de batterie voisins qu'il contacte, de telle manière que chaque élément de batterie est assujetti en position au moins dans la direction longitudinale de son logement allongé par rapport auxdits premiers éléments de calage,
- au moins un second élément de calage monté au-dessus des logements allongés et comportant des projections venant en engagement sous pression avec les premiers éléments de calage de manière à solliciter ces derniers vers les fonds desdits logements allongés et contre les éléments de batterie qu'ils encadrent deux à deux.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
[Fig. 1] est une vue en perspective d'un module de batterie selon l'invention ;
[Fig. 2] est une vue partiellement éclatée d'une batterie selon un premier mode de réalisation de l'invention, intégrant un unique module de batterie tel que représenté figure 1 ;
[Fig. 3] est une vue en perspective de la batterie de la figure 2 à l'état assemblé ;
[Fig. 4] est une vue éclatée en perspective des différents éléments constitutifs d'une batterie selon l'invention telle que représentée figures 2 et 3 et en accord avec le premier mode de réalisation (pour des raisons de lisibilité seule une barrette d'éléments de batterie est représentée) ;
[Fig. 5] est une vue en coupe transversale tronquée, selon un plan perpendiculaire à la direction longitudinale des logements de réception des éléments de batterie, de la batterie représentée figure 3 ;
[Fig. 6] est une vue en perspective d'une barrette d'éléments de batterie selon l'invention, ressortant également de la figure 4 ;
[Fig. 7] est une vue en coupe d'un corps support faisant partie du contenant d'un module de batterie selon l'invention ;
[Fig. 8A] et
[Fig. 8B] sont des vues en perspective selon deux directions différentes d'un premier élément ou moyen de calage faisant partie d'un module selon l'invention ;
[Fig. 8C] est une vue partielle de dessus d'un premier élément de calage tel que représenté figures 8A et 8B ;
[Fig. 9] est une vue en perspective d'un second moyen ou élément de calage faisant partie d'un module selon l'invention ;
[Fig. 10] est une vue en coupe similaire à celle de la figure 5 d'un module seulement partiellement monté, équipé d'un moyen de régulation en température, mais dépourvu de second élément de calage ;
[Fig. 11A] est une vue partielle de détail, à une échelle différente, extraite de la vue en coupe de la figure 10, lors de la mise en place d'un second moyen ou élément de calage ;
[Fig. 11B] est une vue identique à celle de la figure 11A, après mise en place du second élément de calage ;
[Fig. 12] est une vue partielle de dessus, à une échelle différente, du module de batterie partiellement monté de la figure 10 ;
[Fig. 13] est une vue de détail, à une échelle différente, de la paroi de fond et de l'extrémité inférieure d'un module de batterie tel que représentés sur les figures 11A et 11B ;
[Fig. 14A] est une vue en perspective d'un second mode de réalisation d'une batterie intégrant deux modules de batterie selon l'invention, assemblés par leurs parois de fond respectives ;
[Fig. 14B] est une vue en perspective de la batterie représentée figure 14A, vue selon un autre angle et les couvercles étant enlevés ;
[Fig. 15A] est une vue en coupe partielle, selon un plan perpendiculaire à la direction longitudinale des logements allongés recevant les éléments de batterie de la batterie de la figure 14A ;
[Fig. 15B] est une vue en coupe des deux modules de batterie d'une batterie selon la figure 14A, selon un plan de coupe similaire à celui de la figure 15A, en accord avec un autre mode de réalisation ;
[Fig. 16] est une vue en perspective d'un troisième mode de réalisation d'une batterie intégrant une pluralité de modules de batterie selon l'invention, cette batterie étant en cours d'assemblage, et,
[Fig. 17] est une vue partielle en coupe transversale de la batterie de la figure 16.

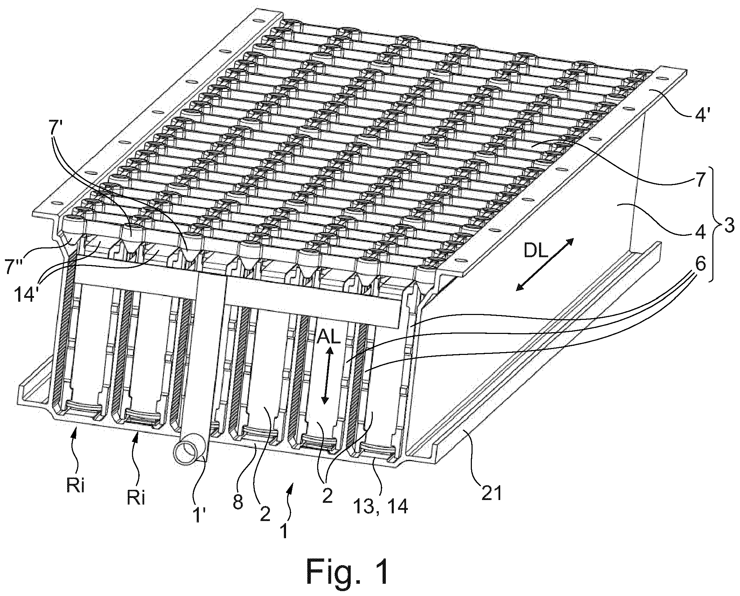

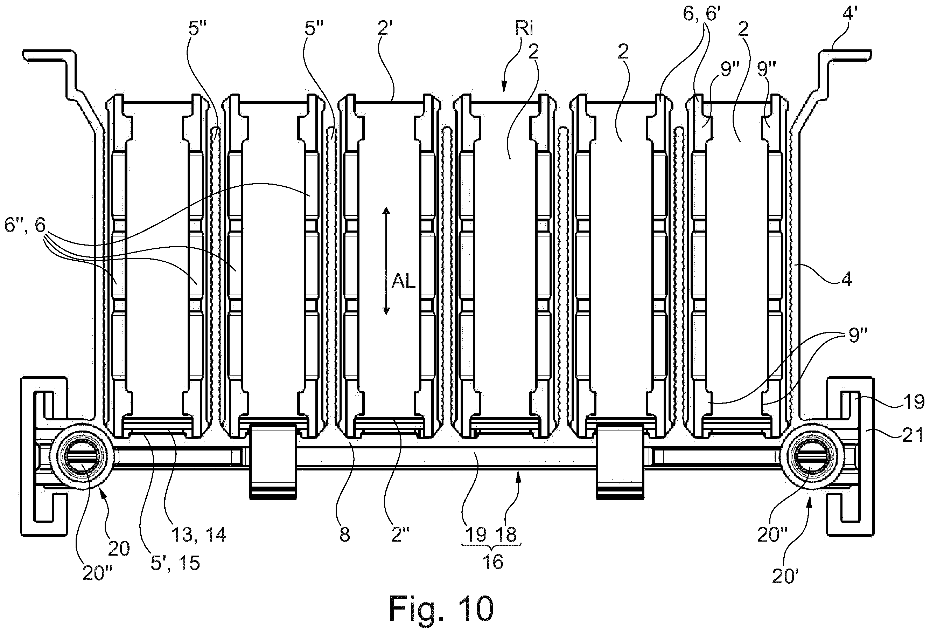

Les figures 1, 2, 4, 5, 10, 11, 14 à 17 montrent toutes, pour certaines seulement en partie, un module 1 de batterie électrique, en particulier de batterie pour véhicule automobile, comprenant une pluralité d'accumulateurs individuels 2 sous la forme d'éléments ou de cellules de batterie, de constitution allongée, avantageusement cylindrique, et préférentiellement à section circulaire, ces éléments de batterie 2 étant reliés électriquement entre eux et aux bornes de connexion 1' du module 1 et montés dans un contenant 3 faisant partie dudit module 1.

Conformément à l'invention, ledit contenant 3 comprend :
- au moins un corps support 4 définissant une pluralité de logements 5 allongés, parallèles entre eux et configurés en forme de rainures ou de canaux pour recevoir chacun une rangée Ri d'éléments de batterie 2 avec leurs axes longitudinaux AL perpendiculaires au fond 5' du logement 5 concerné,
- des premiers éléments de calage 6 sous la forme de pièces ajourées en forme d'échelles ou de cadres comprenant des longerons 6' et des barreaux 6", disposées contre et entre les éléments de batterie 2 d'une rangée Ri et chacune des deux parois latérales 5" du logement allongé 5 les recevant, et dont chaque barreau 6" est situé entre deux éléments de batterie 2 voisins qu'il contacte, de telle manière que chaque élément de batterie 2 est assujetti en position au moins dans la direction longitudinale DL de son logement allongé 5 par rapport auxdits premiers éléments de calage 6,
- au moins un second élément de calage 7 monté au-dessus des logements allongés 5 et comportant des projections 7' venant en engagement sous pression avec les premiers éléments de calage 6 de manière à solliciter ces derniers vers les fonds 5' desdits logements allongés 5 et contre les éléments de batterie 2 qu'ils encadrent deux à deux.

Ainsi, en prévoyant un corps support 4 profilé à section en peigne, la pluralité d'éléments de batterie 2, bien que restant groupé (forte densité de puissance), est stockée en étant segmentée en rangées Ri par des parois de compartimentation 5" du corps support 4, ce dernier permettant ainsi de les maintenir en place fermement, de les séparer physiquement et électriquement (isolation des rangées Ri entre elles) et de les réguler thermiquement de manière efficace (arrangement et maintien individualisés des éléments 2 avec création d'interstices de circulation d'air).

Le maintien précis et individuel des éléments de batterie 2 dans les rainures 5 du corps support 4 fournit par les premiers moyens de calage 6 autorise la formation et la préservation d'interstices de circulation d'air le long des rangées Ri, ainsi qu'autour et éventuellement entre les éléments 2 de chaque rangée.

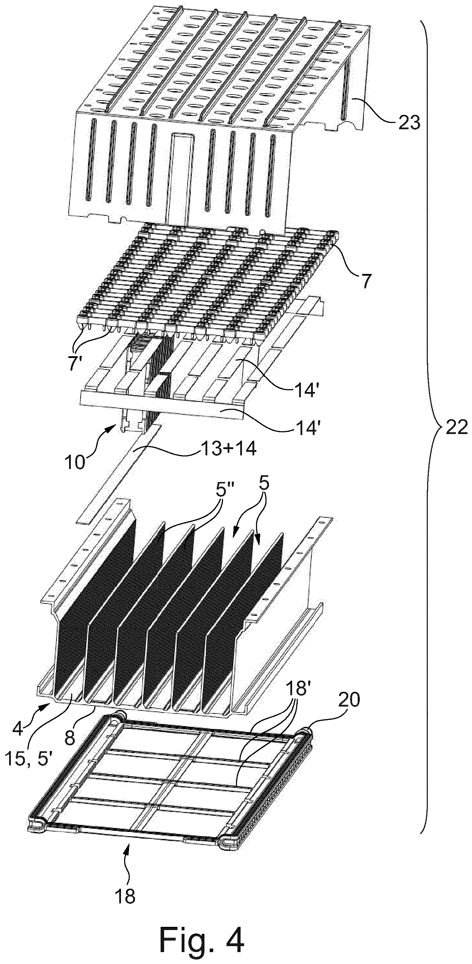

Comme le montrent notamment les figures 4, 6, 8 et 12, les éléments de batterie 2 d'une même rangée Ri sont avantageusement emprisonnés entre au moins une paire d'échelles 6, chaque élément 2 étant préférentiellement maintenu avec calage entre quatre barreaux 6" et quatre portions de longerons 6' dont chacun relie (en haut ou en bas) entre eux deux barreaux 6" (d'une même échelle 6) parmi les quatre barreaux 6" précités.

Ainsi, chaque paire d'échelles 6 est montée dans un logement profilé 5 de manière couchée (c'est-à-dire avec leurs longerons 6' parallèles à la direction longitudinale DL du logement 5 considéré) et fournit des niches individuelles ajourées de réception avec calage d'éléments de batterie 2. Chaque échelle 6 peut s'étendre sur toute la longueur d'un logement 5 ou préférentiellement sur une fraction entière seulement de ce dernier.

Le ou les second(s) élément(s) de calage 7, préférentiellement à extension surfacique, contribuent à favoriser l'interaction entre les pièces ajourées 6 (formant les premiers éléments de calage 6 et encadrant par paire les éléments de batterie 2 entre eux), d'une part, et les éléments 2 qu'ils prennent en sandwich entre eux, d'autre part. Ce(s) second(s) élément(s) de calage 7 complète(nt) en outre le blocage en position desdits éléments 2 dans l'espace par l'intermédiaire des premiers éléments de calage 6 et en agissant sur ces derniers.

De plus, ce(s) second(s) élément(s) de calage 7 contribue(nt) bien entendu également, du fait de sa(leur) forme et de son(leur) positionnement, à un maintien, dans le corps support 4, des échelles 6 et des éléments de batterie 2, que ces dernières encadrent et emprisonnent, dans les logements profilés 5.

Le ou chaque second éléments de calage 7 peut soit être fixé directement sur le corps support 4, soit être maintenu sur et contre ce dernier sous pression par un couvercle 23 ou les deux.

A l'instar des premiers éléments de calage 6, le(s) second(s) élément(s) de calage 7 présente(nt) avantageusement aussi une constitution ajourée autorisant une libre circulation de l'air dans le contenant 3. De plus, en sollicitant les premiers éléments de calage 6 vers les éléments de batterie 2, le(s) second(s) élément(s) de calage 7 maintiennent lesdits éléments 2 et 6 à distance des parois latérales 5" (au moins en partie supérieure, au niveau des bords libres des parois 5").

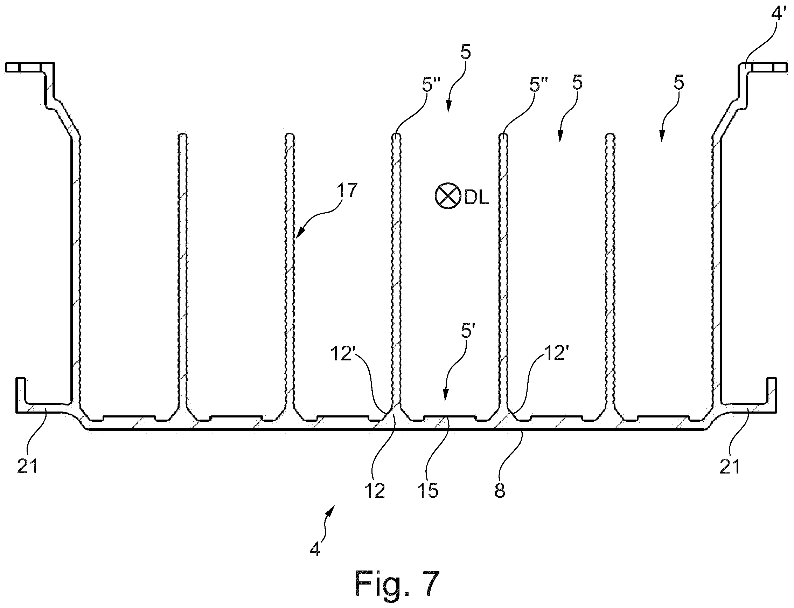

Préférentiellement, le corps support 4 consiste en une pièce profilée à section transversale en forme de peigne, comprenant une pluralité de parois de compartimentation 5" parallèles et régulièrement espacées entre elles et formant, avec une paroi de fond commune 8, les logements allongés 5 (figures 4, 5 et 7 notamment).

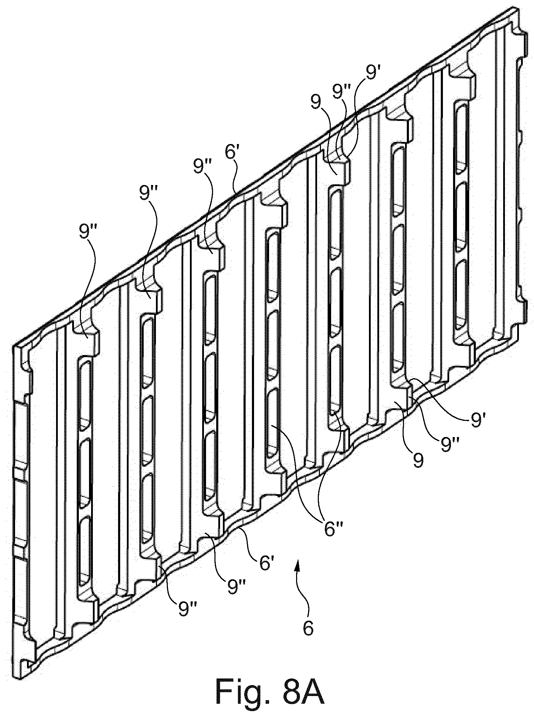

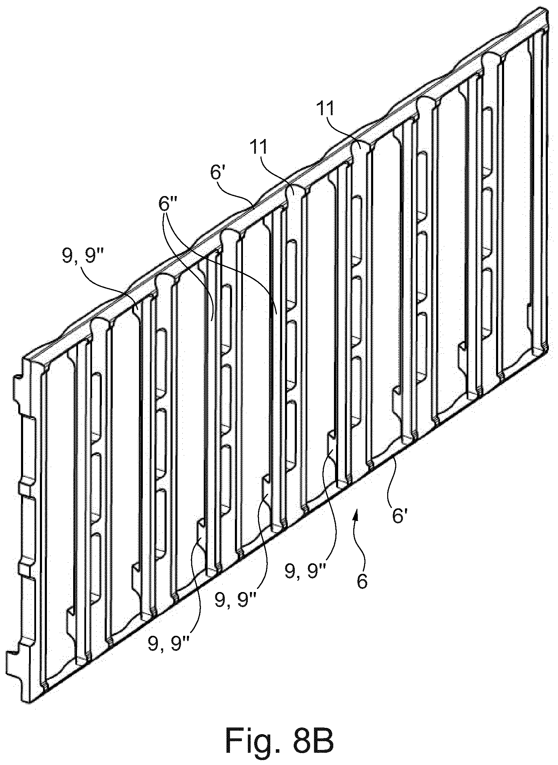

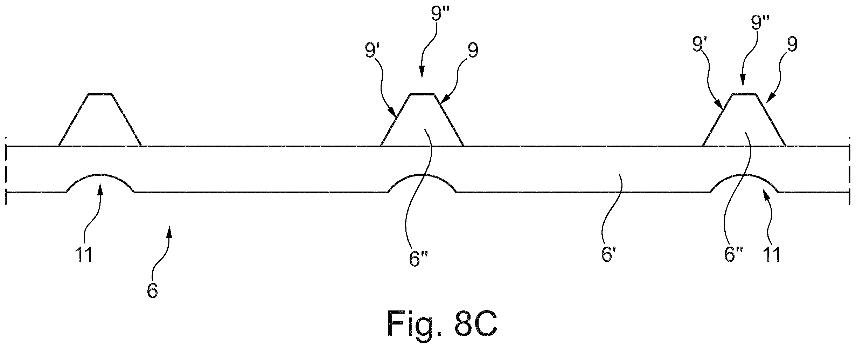

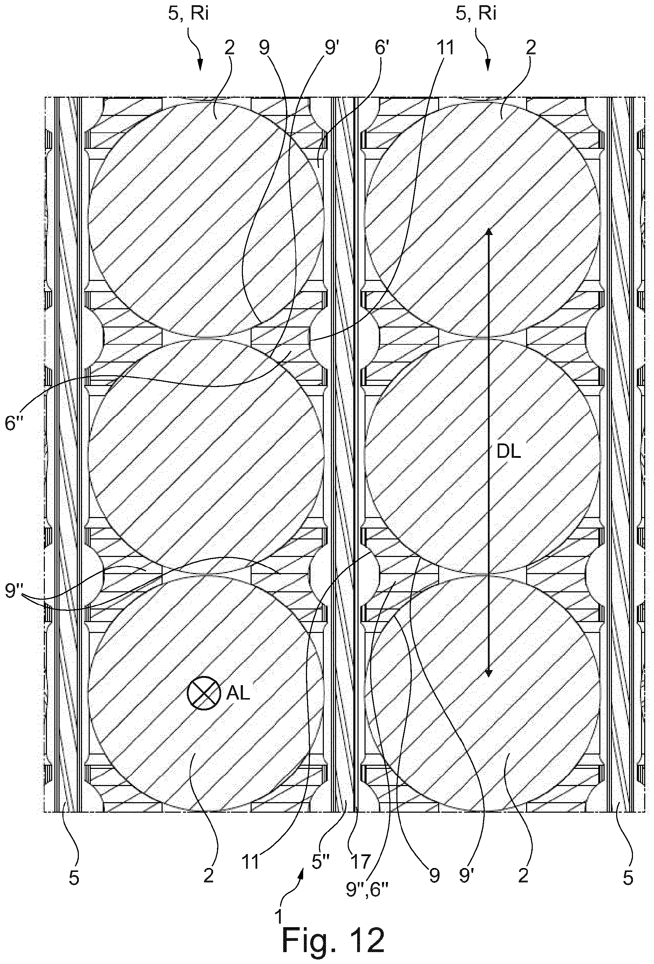

Les éléments de batterie 2 arrangés en alignements simples et présentant chacun une forme cylindrique sont par conséquent exposés sur la totalité de leur surface latérale aux flux d'air circulant et régulés par le corps support 4, en particulier lorsque lesdits éléments sont maintenus à faible distance les uns des autres par les premiers éléments de calage 6 (par exemple en prévoyant des projections 9" en forme de coins avec des zones de contact 9, 9' incurvées - voir figures 8 et 12).

En plus de fournir des blocages en position des éléments de batterie 2 dans des directions multiples (deux axes et un demi-axe), le corps support 4 à section en forme de peigne constitue également avec ses deux parois latérales extérieures et sa paroi de fond, une enveloppe de protection.

En accord avec une caractéristique de l'invention, ressortant notamment des figures 1, 2, 5 et 10 à 12, chaque élément de batterie 2 est, dans un plan perpendiculaire à son axe longitudinal AL, maintenu en position entre deux premiers éléments de calage 6 par contact au moins linéaire, préférentiellement surfacique, avec deux paires de barreaux 6", chaque paire appartenant à l'un desdits premiers éléments de calage 6 précités, lesdits barreaux 6" étant avantageusement configurés et arrangés de telle manière que chaque élément de batterie 2 est positionné fixement à distance, d'une part, des deux parois latérales opposées 5" du logement 5 le recevant et, d'autre part, des éléments de batterie 2 voisins, ce avec des écarts déterminés respectifs.

Avantageusement, chaque barreau 6" présente, sur une partie au moins de sa longueur, de manière continue ou discontinue, au moins une paire de surfaces de contact 9, 9' biseautées, planes ou incurvées, destinées à venir en contact avec deux éléments de batterie 2 voisins d'une rangée Ri.

Les surfaces biseautées 9, 9' peuvent par exemple être formées par les surfaces inclinées de projections 9" supérieures et inférieures, d'un seul tenant avec les barreaux 6" et constituant des coins ou des cales de butée effilées ou analogues, venant se positionner entre deux éléments de batterie 2 à l'état assemblé du module 1.

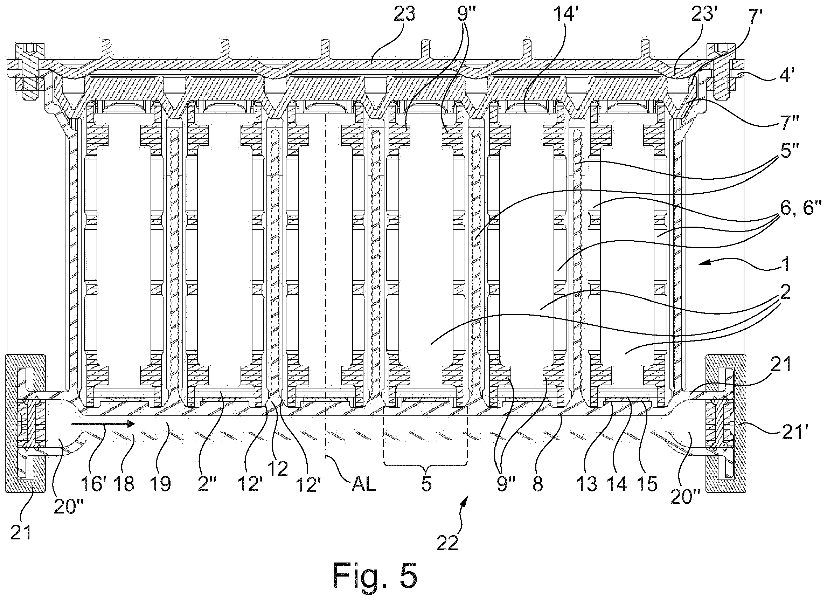

Selon une caractéristique très favorable de l'invention, illustrée notamment sur les figures 5, 6, 10, 11 et 12, les portions de longerons 6' supérieur et inférieur situées entre les barreaux 6" successifs des premiers éléments de calage 6 viennent en prise, le cas échéant par le biais de bords nervurés, avec les extrémités supérieure 2' et inférieure 2" des éléments de batterie 2 cylindriques, le cas échéant sous pression et/ou avec déformation élastique, lesdits éléments de batterie 2 constituant avec les deux premiers éléments de calage 6 qui les emprisonnent entre eux un sous-module de batterie 10 en forme de barrette.

Ces barrettes 10 forment des ensembles modulaires prémontés avant leur mise en place à plusieurs dans un logement 5 du corps support 4.

Dans ces barrettes 2", comprenant par exemple 4 ou 8 éléments de batterie 2 chacune, les éléments 2 peuvent être orientés de manière identique ou non (par exemple chaque moitié des éléments 2 peut présenter son orientation propre, inversée par rapport à celle de l'autre moitié).

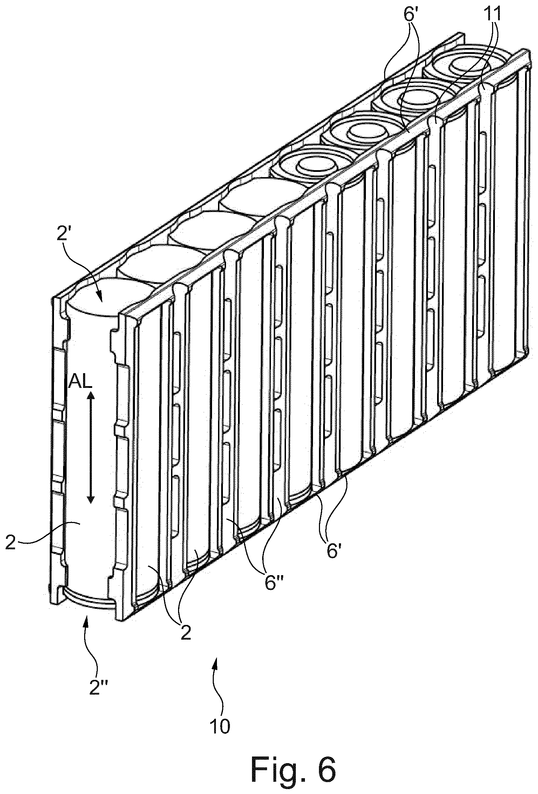

Ainsi, chaque élément de batterie 2 est maintenu dans deux cadres opposés fermés chacun par deux barreaux latéraux 6" et deux portions de longeron 6' supérieur et inférieur de deux premiers éléments de calage 6 opposés (figure 6).

Chaque paire de premières pièces de calage 6 mutuellement opposées forme ainsi une cage emprisonnant une partie au moins des éléments de batterie 2 de la rangée Ri reçue dans le logement profilé 5 concerné. L'alignement d'éléments 2 de la rangée est ainsi segmenté ou subdivisé par ces paires de pièces 6 opposées en unités structurelles et fonctionnelles modulaires, renfermant chacune plusieurs éléments (4, 8 ou 12 par exemple).

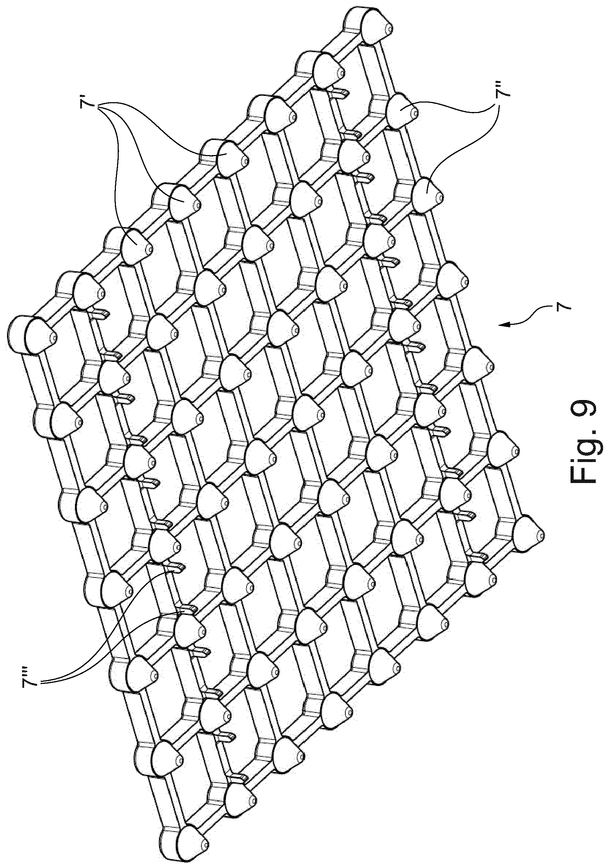

Comme le montrent les figures 1, 2, 4, 5, 9, 14 et 15 en particulier, les projections 7' du ou de chaque second élément de calage 7 s'étendent en rangées au-dessus des parois latérales 5" des logements allongés 5, présentent des surfaces chanfreinées ou biseautées 7" et viennent chacune en engagement avec les longerons 6' supérieurs des deux premiers éléments de calage 6 situés de part et d'autre de la paroi latérale 5" considérée.

Une pression exercée sur le second élément de calage 7, préférentiellement unique pour un module 1 donné, entraine ainsi un écartement des deux premiers éléments de calage concernés entre eux et de la paroi 5" qui les sépare.

Les longerons 6' présentent avantageusement des sites complémentaires 11 coopérant avec lesdites projections 7' de manière à réaliser également un assujettissement dans la direction longitudinale DL des logements allongés 5 entre lesdits premiers et second(s) éléments de calage 6, 7 ( et donc également en blocage en position des éléments de batterie 2 dans ladite direction DL).

Avantageusement, le ou chaque second élément de calage 7 consiste en une plaque grillagée présentant des projections 7' au niveau des intersections de la grille, ces projections 7' présentant avantageusement une forme conique ou tronconique et les sites complémentaires 11 des longerons 6' des premiers éléments de calage 6 consistant alors en des découpes partiellement circulaires et préférentiellement situées chacune en regard d'un barreau 6" (figures 1, 5, 6, 11 et 12).

La ou les plaque(s) ajourée(s) formant les seconds éléments de calage 7 peuvent, en outre, comporter des secondes formations 7"' sous forme d'ergot ou de picots, pouvant servir de butées d'enfoncement pour les premières projections 7' et/ou de moyens de solidarisation par emboîtement dans des sites complémentaires et/ou de butées de positionnement des plaques, bandes ou bornes formant les moyens de raccordement supérieurs 14', complémentaires des bandes conductrices 14 inférieures.

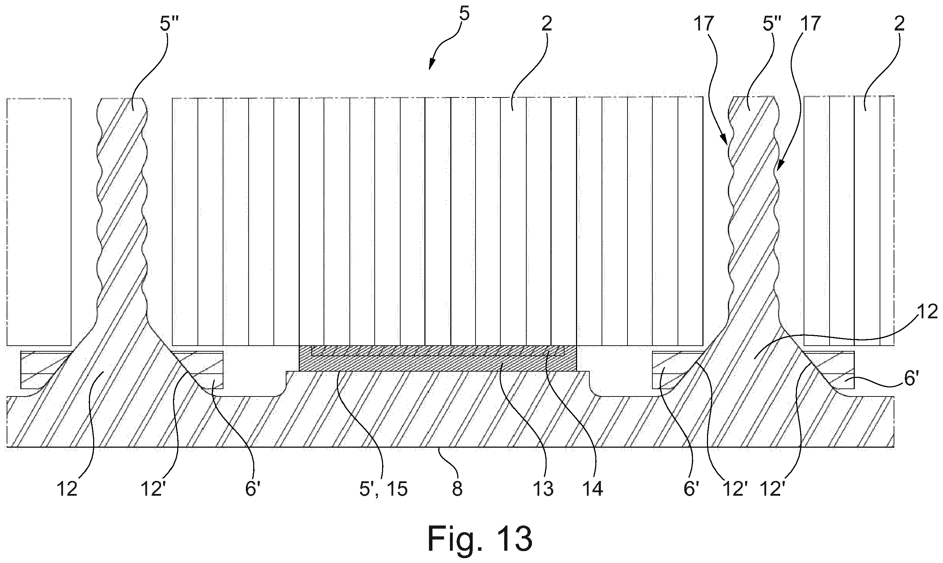

Conformément à une caractéristique constructive bénéfique de l'invention, renforçant et rigidifiant le corps support 4 et contribuant au calage des éléments de batterie 2 dans les logements 5, il peut être prévu que les bases des parois latérales 5" des logements allongés 5 reliées à la paroi de fond 8 du corps support 4 présentent, en section transversale, une forme évasée en direction de la paroi de fond commune 8 constituant ainsi une zone de jonction 12 avec des surfaces biseautées 12', à savoir inclinées par rapport aux fonds 5' des logements 5 et que les longerons 6' inférieurs des premiers éléments de calage 6 viennent en appui, sous la pression des projections 7' du ou des second(s) élément(s) de calage 7, et le cas échéant sous le poids des éléments de batterie 2 qu'ils emprisonnent ou encadrent, sur ces surfaces biseautées 12', et sont ainsi sollicités vers lesdits éléments de batterie 2 (figures 5, 7, 10, 11 et 13).

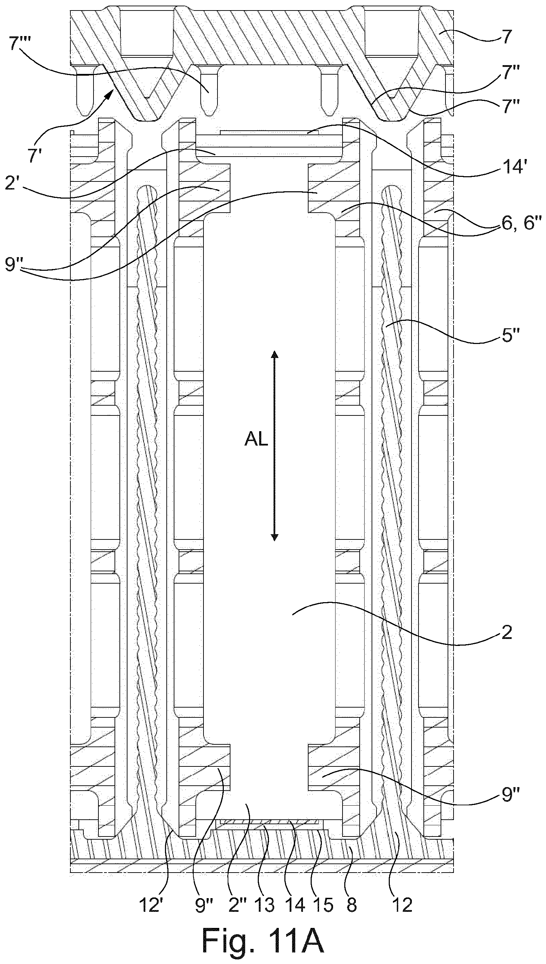

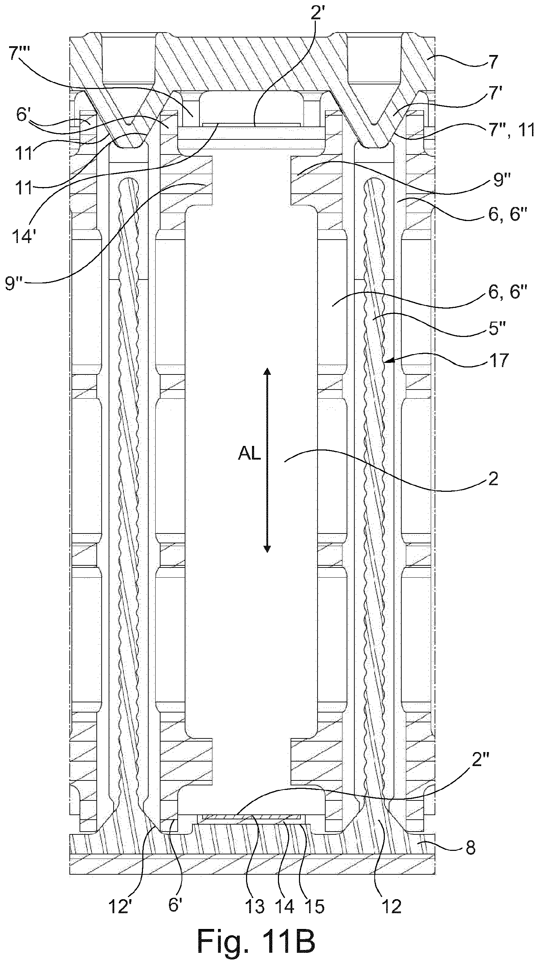

Les longerons inférieurs 6' comportent avantageusement un biseau opposé de celui 12' des fonds 5' des logements 5 (figures 11A et 11B), pour coopérer de manière optimale avec les zones de jonction 12.

En outre, en vue de garantir simultanément un blocage en position sûr, malgré les tolérances de fabrication, notamment dans la direction des axes longitudinaux AL des éléments de batterie 2, de manière isolée ou en barrettes 10, et simultanément assurer la nécessaire connexion électrique entre ces éléments 2, l'invention prévoit de manière avantageuse que les éléments de batterie 2 viennent en appui sur les fonds 5' des logements 5 les recevant par l'intermédiaire de bandes flexibles 13 en matériau élastiquement compressible, bon conducteur thermique et préférentiellement isolant électrique, chaque bande flexible 13 s'étendant sur une partie au moins du logement 5 concerné. En outre, des lignes ou des bandes électriquement conductrices 14 faisant partie des moyens 14' de raccordement électrique des éléments de batterie 2 entre eux sont disposées entre lesdits éléments de batterie 2 et lesdites bandes flexibles 13, en étant ou non intégrées à ces dernières (figures 4, 5, 11, 13 et 15).

La compressibilité élastique du matériau formant les bandes flexibles 13 permet de garantir une immobilisation de tous les éléments de batterie 2 d'un module 1 malgré des disparités éventuelles de fabrication et/ou d'assemblage et d'éviter des chocs durs et la génération de bruit en cas de vibrations.

En accord avec un autre aspect de l'invention, en relation avec la problématique de la régulation en température, au moins la paroi de fond commune 8 définissant les fonds 5', des différents logements allongés 5 du corps support 4 et préférentiellement également leurs parois latérales 5", est (sont) constituée(s) d'un matériau bon conducteur thermique, chaque logement allongé 5 comportant au niveau de son fond 5' une formation 15 définissant une surface proéminente profilée et servant de socle d'appui aux éléments de batterie 2 reçus dans le logement 5 considéré, ce avantageusement par l'intermédiaire de bande(s) compressible(s), électriquement isolante ou conductrice 13, 14 respectivement et thermiquement passante.

Préférentiellement, le corps support profilé 4 est réalisé en totalité et d'un seul tenant en un matériau bon conducteur de chaleur, avantageusement un matériau métallique, préférentiellement de l'aluminium ou un alliage de ce dernier, par exemple sous la forme d'une pièce venue d'extrusion. De manière avantageuse, les premiers et second(s) éléments de calage 6, 7 consistent en des pièces injectées en matière plastique.

La régulation en température du corps support 4 et des éléments de batterie 2 par un moyen adapté peut être réalisée de différentes manières, par exemple par effet Peltier, par exposition à un flux d'air forcé régulé en température ou autre.

Toutefois, en accord avec un mode de réalisation efficace, économique et structurellement facilement intégrable, il est avantageusement prévu que les fonds 5' des différents logements allongés 5 des corps support 4, constituant le cas échéant une paroi de fond commune 15, sont soumises à l'action d'un moyen de régulation thermique 16, par exemple du type à circulation de fluide caloporteur 16', ce moyen de régulation thermique 16 étant soit rapporté sur le corps support 4 du module 1, en étant propre à un module 1 ou partagé entre deux modules 1, soit associé audit module 1 par contact, solidarisation ou coopération, en appartenant à un ensemble de moyens de régulation thermique communs à plusieurs modules 1.

Un tel moyen 16 de régulation thermique peut en outre aisément se raccorder aux circuits de circulation de fluide d'un véhicule, en cas de batterie embarquée.

Afin de favoriser et d'optimiser la transmission des effets de la régulation thermique entre les parois 5" et l'air circulant par convection naturelle (ou de manière forcée), il peut en outre être prévu que les parois latérales 5" des logements allongés 5 présentent, sur leurs deux faces opposées, une structure de surface 17 non plane, par exemple un motif de nervures/rainures ou d'ondulations profilées.

Les différentes dispositions techniques évoquées ci-dessus permettent d'aboutir à une régulation thermique optimisée dans le cas d'éléments de batterie 2 présentant une conduction thermique nettement plus élevée (par exemple d'un facteur 5 au moins, ou préférentiellement au moins d'un facteur 10) selon leur axe longitudinal AL que selon leur direction radiale, associée à une forme cylindrique circulaire ou au moins elliptique.

En effet, l'appui des éléments de batterie 2 sur les bandes 13, 14 (les bandes 13 étant par exemple en silicone chargé et les bandes ou lignes 14 étant métalliques) et sur la paroi de fond 8 toutes thermiquement conductrices, autorise un bon transfert thermique par conduction au niveau des fonds 5' des logements 5.

De plus, les éléments de batterie 2 du fait de leur forme extérieure cylindrique, présentent une surface latérale extérieure exposée en totalité à la circulation d'air naturelle interne au module 1, même lorsque les éléments 2 voisins d'une barrette 10 ou d'une rangée Ri sont en contact (densité d'occupation maximale). Toutefois, la fixation d'un intervalle libre, même d'une fente mince (par exemple au plus égal à 1 mm en largeur), entre deux éléments 2 voisins peut contribuer favorablement à une circulation d'air autour desdits éléments 2, et donc à leur régulation thermique par circulation d'air volumique naturelle, sans compromettre la densité de stockage énergétique du module 1.

Par ailleurs, une structure ajourée, d'une part, des barreaux 6" des premiers éléments de calage 6 en forme d'échelles ou de cadres à traverses et, d'autre part, de la plaque formant le second élément de calage 7, ainsi qu'une hauteur des parois de compartimentation 5" inférieure à celle des barrettes 10 favorise également la circulation d'air par convection naturelle dans une batterie 22 renfermant un ou plusieurs modules de batterie 1.

De plus, par la subdivision à plusieurs niveaux du groupe d'éléments de batterie 2 formant le module 1, les effets de la régulation en température se font ressentir au cœur même de l'agglomération d'éléments de batterie 2, en les exposant individuellement à l'action régulatrice en température des parois conductrices latérales et de fond 5" et 8 - régulation directement transposée à l'intérieur du groupe d'éléments de batterie 2 formant le module 1.

Lesdites bandes ou lignes 14 font avantageusement partie d'un dispositif d'interconnexion électrique des différents éléments 2 sous la forme d'un jeu de barres inférieures 14 et supérieures 14' reliant entre eux des éléments 2 voisins pour les connecter en parallèle, ces groupes d'éléments 2 en parallèle d'une même rangée Ri étant eux-mêmes reliés en série ou en parallèle/série (voir disposition et interconnexion des éléments 2 dans les figures 4, 6, 14B). Ce jeu de barres 14, 14' de connexion est lui-même relié au moyen 1' de raccordement électrique du module de batterie 1 (voir figures 4 et 5).

Plus précisément, la connexion électrique des éléments de batterie 2 d'un module 1 peut, par exemple, être organisée avantageusement sur trois niveaux différents, en fonction notamment du ratio tension/courant souhaité pour une construction de module 1 (nombre total d'éléments 2, longueur et nombre de logements 5 du corps support 4) donné.

Ainsi, un premier niveau de connexion électrique peut être réalisé entre les éléments de batterie 2 d'un alignement d'éléments 2 d'une barrette 10 : elle peut être du type parallèle, parallèle/série ou série en fonction des caractéristiques recherchées.

Un second niveau de connexion électrique peut être réalisé entre barrettes 10, adjacentes ou non, d'une rangée Ri d'éléments 2 montés de manière alignée et calée dans un logement allongé 5 du corps support 4.

Enfin, le troisième niveau de connexion électrique peut consister à relier les différentes rangées Ri entre elles et avec un connecteur commun 1' d'interfaçage et de raccordement avec l'extérieur propre au module 1 considéré.

Ces connexions électriques entre éléments 2 d'une barrette 10, entre barrettes 10 constituant une rangée Ri et entre rangées Ri d'un module 1 sont réalisées par combinaison des bandes ou de lignes conductrices inférieures 14 et des bandes conductrices supérieures 14', formant ensemble un réseau de connexion électrique structuré relié aux bornes inférieures et supérieures des éléments 2, comme cela ressort notamment des figures annexées.

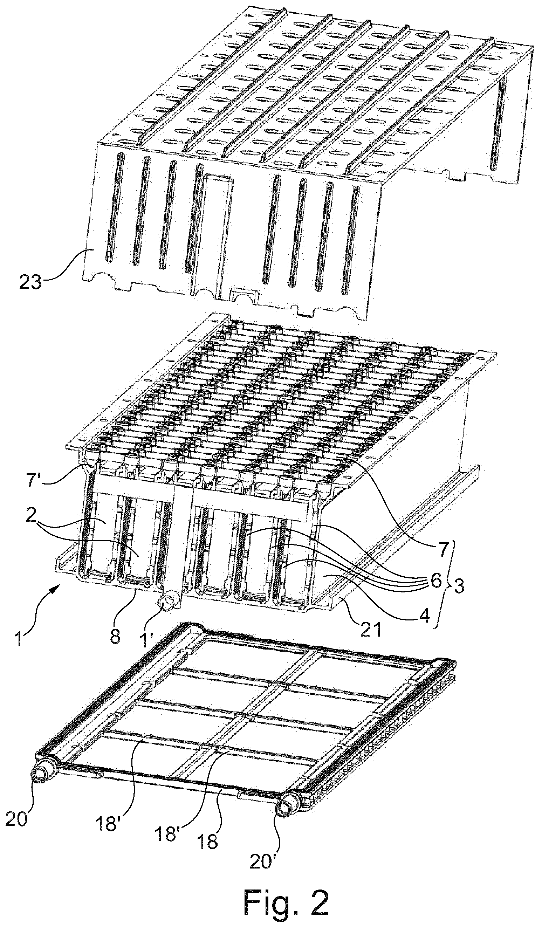

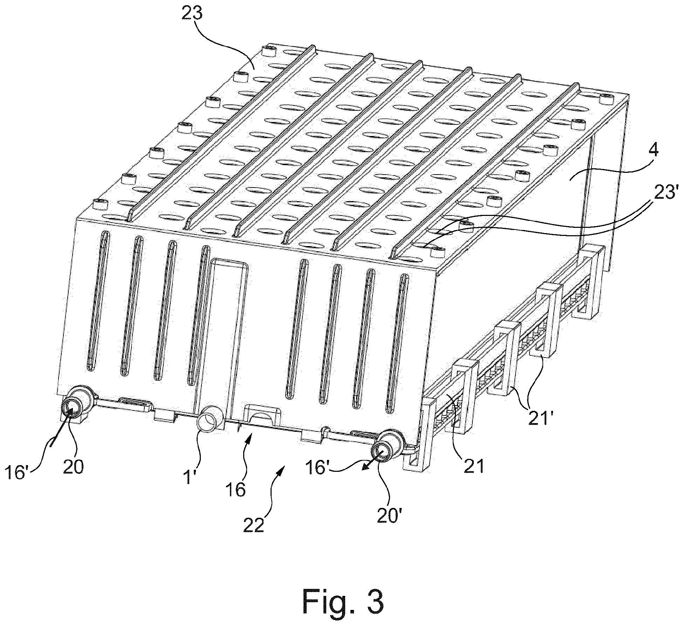

Conformément à une variante constructive préférée de l'invention, à la fois compacte et efficace, illustrée notamment sur les figures 2 à 5 et 10, le moyen de régulation thermique 16 propre audit module 1 comprend une paroi 18, préférentiellement en un matériau isolant ou au moins faiblement conducteur thermique, rapportée sur la face externe de la paroi de fond commune 8 du corps support 4 et constituant par coopération avec cette dernière un double-fond 19 étanche, des moyens 20, 20' d'amenée et d'évacuation de liquide caloporteur 16' dans le volume intérieur du double-fond 19 étant intégrés à ladite paroi rapportée 18 ou formée par son assemblage avec la paroi de fond commune 8 du corps support 4.

Avantageusement, le volume interne du double-fond 19 comprend un ou plusieurs chemin(s) de circulation du fluide caloporteur 16' entre un port d'entrée 20 et un port de sortie 20', ce(s) chemin(s) étant constitué(s) soit uniquement par des formations 18' intégrées à la paroi rapportée 18 du double-fond 19, soit par coopération de formations mutuellement complémentaires présentes respectivement sur la paroi de fond commune 8 et sur la paroi rapportée 18.

Les chemins de circulation peuvent notamment comprendre des conduits de circulation principaux 20" formés latéralement dans la continuité des ports 20 et 20' ; et éventuellement des chemins ou voies de circulation secondaires transversaux (non représentés spécifiquement), la circulation de fluide pouvant également se faire dans tout le volume du double-fond 19, lequel peut être compartimenté ou non transversalement.

En vue de permettre un assemblage aisé et résistant, il peut être prévu que le corps support profilé 4 comporte le long des côtés latéraux de la paroi de fond commune 8 des rebords 21 saillants vers l'extérieur et que la paroi rapportée 18, constituant avec la paroi de fond commune 8 le double-fond 19, est solidarisée avec ledit corps support 4 au niveau desdits rebords 21, par exemple par des moyens de clippage 21', de vissage ou d'assemblage mécanique analogue.

L'invention concerne également, comme le montrent les figures 2 à 5, et 14 à 17, une batterie 22 pour véhicule motorisé, notamment pour véhicule automobile hybride ou électrique, caractérisé en ce qu'il comprend au moins un module de batterie 1 tel que décrit précédemment.

La batterie 22 peut, comme cela ressort des figures précitées, être déclinée selon une multitude de formats (taille, puissance) dépendant de l'utilisation envisagée (batterie d'appoint, source principale d'énergie, batterie de sauvegarde, ...) et de la puissance et/ou de l'énergie requise(s).

Selon un premier mode de réalisation de l'invention, ressortant des figures 2 à 5, la batterie 22 peut comprendre un unique module de batterie 1, préférentiellement pourvu d'un moyen de régulation thermique, ainsi qu'un couvercle 23, avantageusement ajouré et préférentiellement en un matériau isolant électrique, tel que du plastique ou analogue, dont les parois forment un U et sont configurées pour recouvrir les faces ouvertes des logements allongés 5 du corps support 4 du module 1, de manière à constituer avec le contenant 3 une enveloppe extérieure continue et une enceinte fermée dans laquelle les éléments de batterie 2 sont maintenus avec blocage en position mécaniquement.

Le couvercle 23 peut notamment être fixé sur des rebords renforcés ou des ailes d'extrémité saillantes 4' des parois latérales extérieures du corps support 4.

Ce couvercle 23 peut être réalisé d'un seul tenant ou être formé de plusieurs parties constitutives assemblées entre elles.

Ce couvercle 23, fixé par vissage ou clippage par exemple au niveau d'ailes latérales de rebords supérieurs du corps support 4, peut participer au blocage en position du second élément de calage 7 sur les barrettes 10 , par exemple par l'intermédiaire de zones déformées ou renfoncées 23' venant en engagement coopérant avec des projections 7' au niveau de leurs extrémités creuses opposées à leurs extrémités coniques fournissant les surfaces biseautées 7".

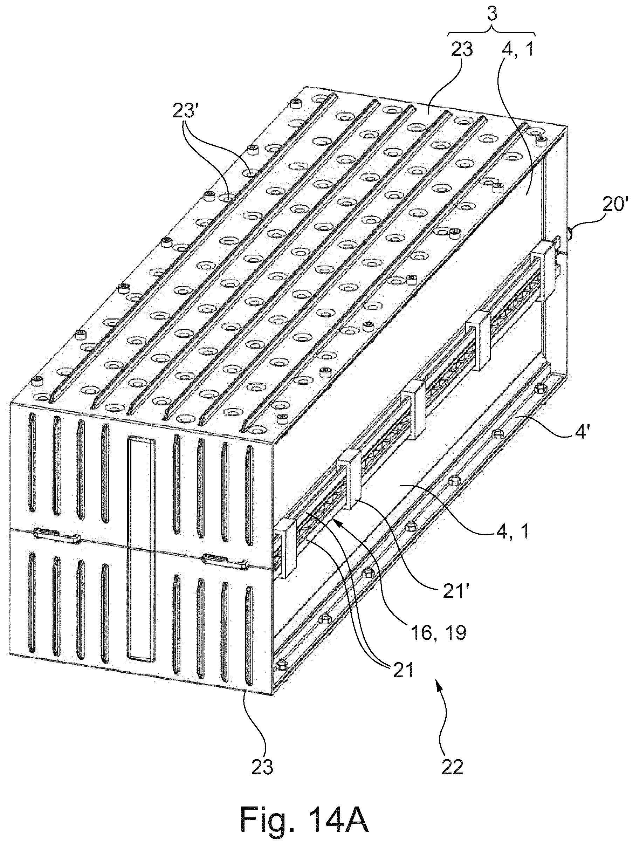

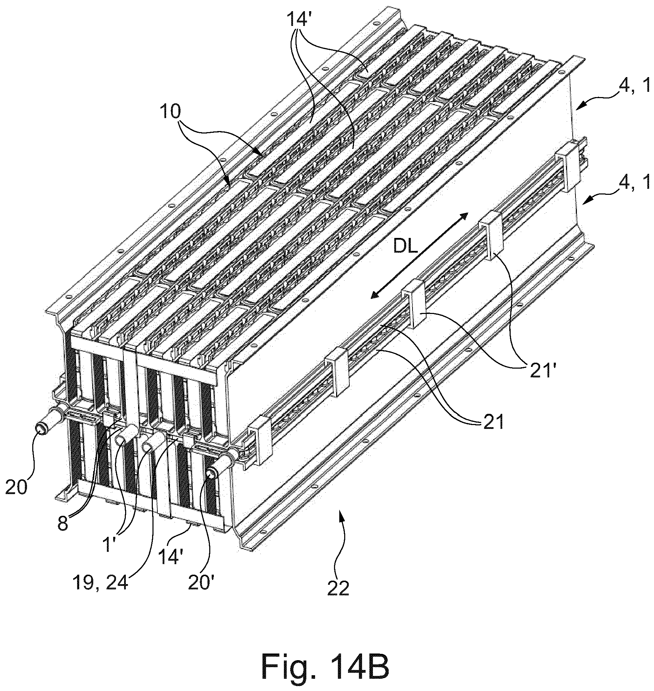

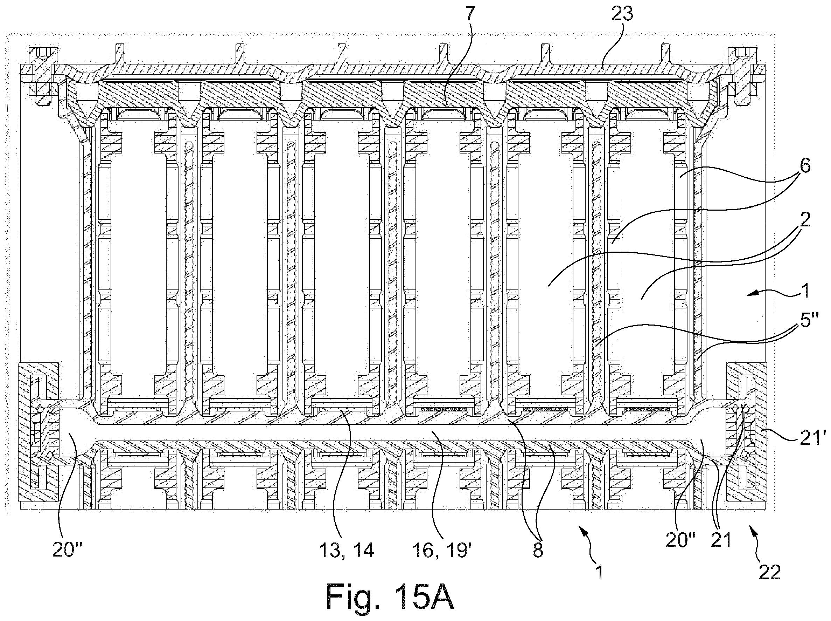

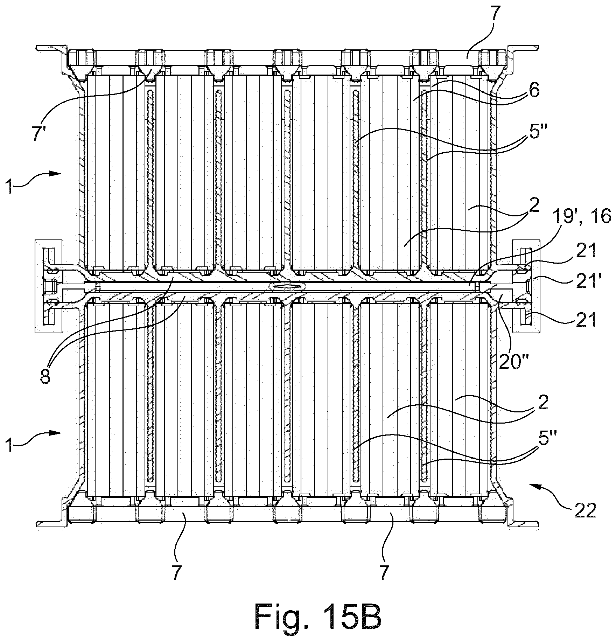

Selon un deuxième mode de réalisation de l'invention, ressortant des figures 14 et 15, la batterie 22 peut aussi comprendre deux modules de batterie 1 assemblés entre eux avec mise en regard espacée de leurs parois de fond 8 respectives et création d'un volume 19' de circulation de fluide caloporteur 16' entre elles formant un moyen de régulation thermique 16 commun avec des ports d'entrée et de sortie 20, 20', ainsi qu'avantageusement deux couvercles 23 dont les parois de chacun forment un U et sont configurées pour recouvrir les faces ouvertes des logements allongés 3 d'un des deux corps supports 1, de manière à constituer avec les deux contenants 3 deux enceintes fermées et mutuellement accolées dans lesquelles les éléments de batterie 2 sont maintenus avec blocage en position.

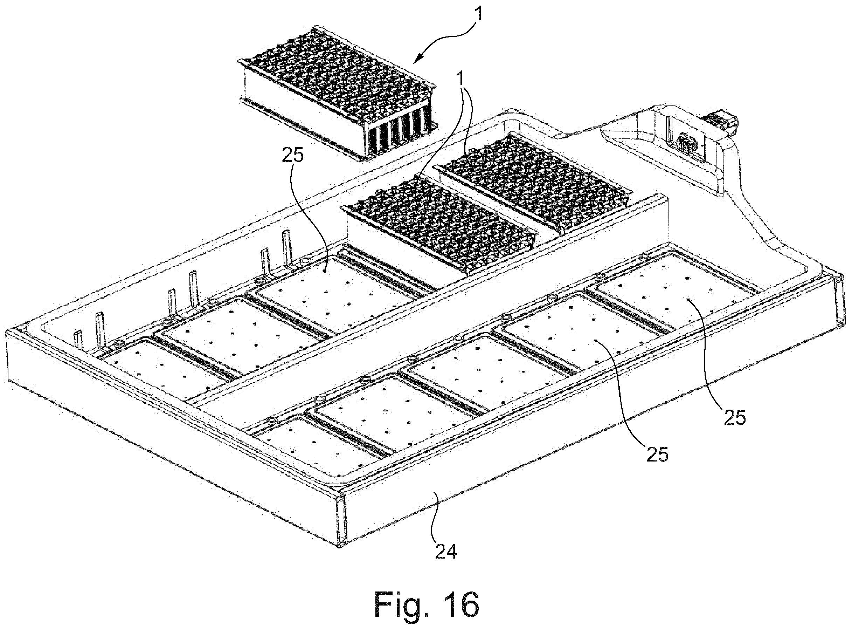

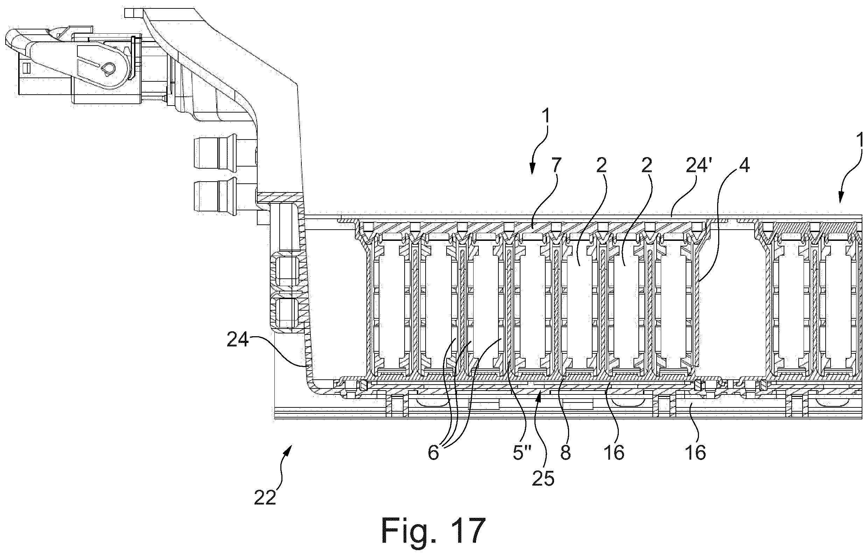

Enfin, selon un troisième mode de réalisation de l'invention, illustré partiellement sur les figures 16 et 17, la batterie 22 peut comprendre au moins deux, préférentiellement plusieurs, modules de batterie 1 disposés dans une première partie de boitier formant bac 24 et présentant des emplacements de réception 25 pour lesdits modules 1, chacun desdits emplacements 25 comportant un moyen de régulation thermique 16 soit sous la forme d'une portion de paroi renfoncée formant avec la paroi de fond 8 du corps support 4 d'un module 1 un double fond, soit sous la forme d'une surface d'appui pour la paroi de fond 8 du corps support 4 d'un module de batterie 1, régulée en température, une seconde partie de boitier formant couvercle 24' étant prévue pour réaliser par coopération avec la première partie 24 précitée, un boitier fermé.

Les moyens de régulation thermique intégrés dans le bac 24 et, le cas échéant, dans le couvercle 24' du boitier, peuvent par exemple correspondre aux moyens de régulation décrits et représentés plus en détail dans les demandes de brevets français n° 1853129, n° 1853131 et n° 1856167 au nom de la demanderesse.

L'invention concerne également un procédé de réalisation d'un module de batterie 1 tel que décrit ci-dessus, caractérisé en ce qu'il consiste essentiellement à constituer des sous-modules de batterie 10 en emprisonnant une pluralité d'éléments de batterie 2 entre deux premiers éléments de calage 6 en forme de cadres pourvus de barreaux transversaux 6", à mettre en place ces sous-modules 10 dans les différents logements allongés 5 d'un corps support 4 profilé à section en forme de peigne, avantageusement avec interposition de bandes élastiquement compressibles et conductrices 13, 14 au niveau des fonds 5' des logements 5, à mettre en place des moyens complémentaire de raccordement électrique des différents éléments de batterie 2, à rapporter au moins un second élément de calage 7 par-dessus les logements allongés 5, lequel vient en engagement avec les premiers éléments de calage 6 et bloque en position les sous-modules 10 dans les logements 5, préférentiellement avec sollicitation sous pression, du fait de la fixation dudit second élément de calage 7 au corps support 4 et/ou de l'appui d'un couvercle 23 recouvrant au moins partiellement ledit corps support 4.

Enfin, l'invention porte aussi un procédé de fabrication d'une batterie 22 telle que décrite précédemment.

Ce procédé est caractérisé en ce qu'il consiste à réaliser un ou plusieurs module(s) de batterie 1, en mettant avantageusement en œuvre le procédé de réalisation d'un module de batterie, et ensuite, en fonction du type de batterie 22 résultante souhaité, à effectuer une des trois séries d'opérations consécutives a), b) ou c) suivantes :
- a) rapporter un moyen de régulation thermique 16 sur la paroi de fond 8 du corps support 4 d'un module 1 et fermer le contenant 3 de ce module 1 avec un couvercle 23 dont les parois forment un U et sont configurées pour recouvrir les faces ouvertes des logements 5 dudit contenant 3 ;
- b) assembler deux modules 1 par les parois de fond 8 de leurs corps support 4 respectifs avec réalisation d'un moyen de régulation thermique 16 commun et fermer chacun des deux contenants 3 avec un couvercle 23 dont les parois forment un U et sont configurées pour recouvrir les faces ouvertes des logements 5 du contenant 3 du module 1 respectivement concerné ;
- c) disposer une pluralité de modules 1 dans une première partie de boitier 24 formant bac, chacun à un emplacement de réception 25 dédié qui, soit comporte un moyen de régulation thermique 16 sous la forme d'une surface d'appui pour la paroi de fond 8 du corps support 4 du module 1 considéré, régulée en température, soit comporte une portion de paroi renfoncée constituant par coopération avec la paroi de fond 8 du corps support 4 du module 1 concerné, un double fond, relié à des moyens de circulation de fluide caloporteur 16' intégrés dans le bac 24, à mettre en place éventuellement les connexions électriques des différents modules entre eux et avec les moyens de raccordement de la batterie 22 et, enfin, à mettre en place et à assembler avec le bac 24 une seconde partie de boitier 24' formant couvercle, les deux parties 24, 24' constituant par coopération un boitier fermé.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention.

## Revendications

1. Module (1) de batterie électrique, en particulier de batterie pour véhicule automobile, comprenant une pluralité d'accumulateurs individuels (2) sous la forme d'éléments ou de cellules de batterie, de constitution allongée, avantageusement cylindrique, et préférentiellement à section circulaire, ces éléments de batterie (2) étant reliés électriquement entre eux et aux bornes de connexion (1') du module (1) et montés dans un contenant (3) faisant partie dudit module (1), ledit contenant (3) comprend au moins un corps support (4) définissant une pluralité de logements (5) allongés, parallèles entre eux et configurés en forme de rainures ou de canaux pour recevoir chacun une rangée (Ri) d'éléments de batterie (2) avec leurs axes longitudinaux (AL) perpendiculaires au fond (5') du logement (5) concerné,
module de batterie (1) **caractérisé en ce que** ledit contenant (3) comprend:
- des premiers éléments de calage (6) sous la forme de pièces ajourées en forme d'échelles ou de cadres comprenant des longerons (6') et des barreaux (6"), disposées contre et entre les éléments de batterie (2) d'une rangée (Ri) et chacune des deux parois latérales (5") du logement allongé (5) les recevant, et dont chaque barreau (6") est situé entre deux éléments de batterie (2) voisins qu'il contacte, de telle manière que chaque élément de batterie (2) est assujetti en position au moins dans la direction longitudinale (DL) de son logement allongé (5) par rapport auxdits premiers éléments de calage (6),
- au moins un second élément de calage (7) monté au-dessus des logements allongés (5) et comportant des projections (7') venant en engagement sous pression avec les premiers éléments de calage (6) de manière à solliciter ces derniers vers les fonds (5') desdits logements allongés (5) et contre les éléments de batterie (2) qu'ils encadrent deux à deux.

2. Module de batterie selon la revendication 1, **caractérisé en ce que** le corps support (4) consiste en une pièce profilée à section transversale en forme de peigne, comprenant une pluralité de parois de compartimentation (5") parallèles et régulièrement espacées entre elles et formant, avec une paroi de fond commune (8), les logements allongés (5).

3. Module de batterie selon l'une quelconque des revendications 1 et 2, **caractérisé en ce que** chaque élément de batterie (2) est, dans un plan perpendiculaire à son axe longitudinal (AL), maintenu en position entre deux premiers éléments de calage (6) par contact au moins linéaire, préférentiellement surfacique, avec deux paires de barreaux (6"), chaque paire appartenant à l'un desdits premiers éléments de calage (6) précités, lesdits barreaux (6") étant avantageusement configurés et arrangés de telle manière que chaque élément de batterie (2) est positionné fixement à distance, d'une part, des deux parois latérales opposées (5") du logement (5) le recevant et, d'autre part, des éléments de batterie (2) voisins, ce avec des écarts déterminés respectifs.

4. Module de batterie selon la revendication 3, **caractérisé en ce que** chaque barreau (6") présente, sur une partie au moins de sa longueur, de manière continue ou discontinue, au moins une paire de surfaces de contact (9, 9') biseautées, planes ou incurvées, destinées à venir en contact avec deux éléments de batterie (2) voisins d'une rangée (Ri).

5. Module de batterie selon l'une quelconque des revendications 1 à 4, **caractérisé en ce que** les portions de longerons (6') supérieur et inférieur situées entre les barreaux (6") successifs des premiers éléments de calage (6) viennent en prise, le cas échéant par le biais de bords nervurés, avec les extrémités supérieure (2') et inférieure (2") des éléments de batterie (2) cylindriques, le cas échéant sous pression et/ou avec déformation élastique, lesdits éléments de batterie (2) constituant avec les deux premiers éléments de calage (6) qui les emprisonnent entre eux un sous-module de batterie (10) en forme de barrette.

6. Module de batterie selon l'une quelconque des revendications 1 à 5, **caractérisé en ce que** les projections (7') du ou de chaque second élément de calage (7) s'étendent en rangées au-dessus des parois latérales (5") des logements allongés (5), présentent des surfaces chanfreinées ou biseautées (7") et viennent chacune en engagement avec les longerons (6') supérieurs des deux premiers éléments de calage (6) situés de part et d'autre de la paroi latérale (5") considérée, ces longerons (6') présentant avantageusement des sites complémentaires (11) coopérant avec lesdites projections (7') de manière à réaliser également un assujettissement dans la direction longitudinale (DL) des logements allongés (5) entre lesdits premiers et second(s) éléments de calage (6, 7).

7. Module de batterie selon la revendication 6, **caractérisé en ce que** le ou chaque second élément de calage (7) consiste en une plaque grillagée présentant des projections (7') au niveau des intersections de la grille, ces projections (7') présentant avantageusement une forme conique ou tronconique et les sites complémentaires (11) des longerons (6') des premiers éléments de calage (6) consistant alors en des découpes partiellement circulaires et préférentiellement situées chacune en regard d'un barreau (6").

8. Module de batterie selon l'une quelconque des revendications 1 à 7, **caractérisé en ce que** les bases des parois latérales (5") des logements allongés (5) reliées à la paroi de fond (8) du corps support (4) présentent, en section transversale, une forme évasée en direction de la paroi de fond commune (8) constituant ainsi une zone de jonction (12) avec des surfaces biseautées (12'), à savoir inclinées par rapport aux fonds (5') des logements (5) et **en ce que** les longerons (6') inférieurs des premiers éléments de calage (6) viennent en appui, sous la pression des projections (7') du ou des second(s) élément(s) de calage (7), et le cas échéant sous le poids des éléments de batterie (2) qu'ils emprisonnent ou encadrent, sur ces surfaces biseautées (12'), et sont ainsi sollicités vers lesdits éléments de batterie (2).

9. Module de batterie selon l'une quelconque des revendications 1 à 8, **caractérisé en ce que** les éléments de batterie (2) viennent en appui sur les fonds (5') des logements (5) les recevant par l'intermédiaire de bandes flexibles (13) en matériau élastiquement compressible, bon conducteur thermique et préférentiellement isolant électrique, chaque bande flexible (13) s'étendant sur une partie au moins du logement (5) concerné, des lignes ou des bandes électriquement conductrices (14) faisant partie des moyens (14') de raccordement électrique des éléments de batterie (2) entre eux étant disposées entre lesdits éléments de batterie (2) et lesdites bandes flexibles (13), en étant ou non intégrées à ces dernières.

10. Module de batterie selon l'une quelconque des revendications 1 à 9, **caractérisé en ce qu'**au moins la paroi de fond commune (8) définissant les fonds (5'), des différents logements allongés (5) du corps support (4) et préférentiellement également leurs parois latérales (5"), est (sont) constituée(s) d'un matériau bon conducteur thermique, chaque logement allongé (5) comportant au niveau de son fond (5') une formation (15) définissant une surface proéminente profilée et servant de socle d'appui aux éléments de batterie (2) reçus dans le logement (5) considéré, ce avantageusement par l'intermédiaire de bande(s) compressible(s), électriquement isolante ou conductrice (13, 14) respectivement et thermiquement passante.

11. Module de batterie selon l'une quelconque des revendications 1 à 10, **caractérisé en ce que** le corps support profilé (4) est réalisé en totalité et d'un seul tenant en un matériau bon conducteur de chaleur, avantageusement un matériau métallique, préférentiellement de l'aluminium ou un alliage de ce dernier, par exemple sous la forme d'une pièce venue d'extrusion, et **en ce que** les premiers et second(s) éléments de calage (6, 7) consistent en des pièces injectées en matière plastique.

12. Module de batterie selon l'une quelconque des revendications 1 à 11, **caractérisé en ce que** les fonds (5') des différents logements allongés (5) des corps support (4), constituant le cas échéant une paroi de fond commune (15), sont soumises à l'action d'un moyen de régulation thermique (16), par exemple du type à circulation de fluide caloporteur (16'), ce moyen de régulation thermique (16) étant soit rapporté sur le corps support (4) du module (1), en étant propre à un module (1) ou partagé entre deux modules (1), soit associé audit module (1) par contact, solidarisation ou coopération, en appartenant à un ensemble de moyens de régulation thermique communs à plusieurs modules (1).

13. Module de batterie selon l'une quelconque des revendications 1 à 12, **caractérisé en ce que** les parois latérales (5") des logements allongés (5) présentent, sur leurs deux faces opposées, une structure de surface (17) non plane, par exemple un motif de nervures/rainures ou d'ondulations profilées.

14. Module de batterie selon la revendication 12, **caractérisé en ce que** le moyen de régulation thermique (16) propre audit module (1) comprend une paroi (18), préférentiellement en un matériau isolant ou au moins faiblement conducteur thermique, rapportée sur la face externe de la paroi de fond commune (8) du corps support (4) et constituant par coopération avec cette dernière un double-fond (19) étanche, des moyens (20, 20') d'amenée et d'évacuation de liquide caloporteur (16') dans le volume intérieur du double-fond (19) étant intégrés à ladite paroi rapportée (18) ou formée par son assemblage avec la paroi de fond commune (8) du corps support (4).

15. Module de batterie selon la revendication 14, **caractérisé en ce que** le volume interne du double-fond (19) comprend un ou plusieurs chemin(s) de circulation du fluide caloporteur (16') entre un port d'entrée (20) et un port de sortie (20'), ce(s) chemin(s) étant constitué(s) soit uniquement par des formations (18') intégrées à la paroi rapportée (18) du double-fond (19), soit par coopération de formations mutuellement complémentaires présentes respectivement sur la paroi de fond commune (8) et sur la paroi rapportée (18).

16. Module de batterie selon la revendication 14 ou 15, **caractérisé en ce que** le corps support profilé (4) comporte le long des côtés latéraux de la paroi de fond commune (8) des rebords (21) saillants vers l'extérieur et **en ce que** la paroi rapportée (18), constituant avec la paroi de fond commune (8) le double-fond (19), est solidarisée avec ledit corps support (4) au niveau desdits rebords (21), par exemple par des moyens de clippage (21'), de vissage ou d'assemblage mécanique analogue.

17. Batterie (22) pour véhicule motorisé, notamment pour véhicule automobile hybride ou électrique, **caractérisé en ce qu'**il comprend au moins un module de batterie (1) selon l'une quelconque des revendications 1 à 16.

18. Batterie selon la revendication 17, **caractérisée en ce qu'**elle comprend un unique module de batterie (1), préférentiellement pourvu d'un moyen de régulation thermique selon l'une des revendications 14 à 16, ainsi qu'un couvercle (23), avantageusement ajouré et préférentiellement en un matériau isolant électrique, tel que du plastique ou analogue, dont les parois forment un U et sont configurées pour recouvrir les faces ouvertes des logements allongés (5) du corps support (4) du module (1), de manière à constituer avec le contenant (3) une enveloppe extérieure continue et une enceinte fermée dans laquelle les éléments de batterie (2) sont maintenus avec blocage en position mécaniquement.

19. Batterie selon la revendication 17, **caractérisée en ce qu'**elle comprend deux modules de batterie (1) assemblés entre eux avec mise en regard espacée de leurs parois de fond (8) respectives et création d'un volume (19') de circulation de fluide caloporteur (16') entre elles formant un moyen de régulation thermique (16) commun avec des ports d'entrée et de sortie (20, 20'), ainsi qu'avantageusement deux couvercles (23) dont les parois de chacun forment un U et sont configurées pour recouvrir les faces ouvertes des logements allongés (3) d'un des deux corps supports (1), de manière à constituer avec les deux contenants (3) deux enceintes fermées et mutuellement accolées dans lesquelles les éléments de batterie (2) sont maintenus avec blocage en position.

20. Batterie selon la revendication 17, **caractérisée en ce qu'**elle comprend au moins deux, préférentiellement plusieurs, modules de batterie (1) disposés dans une première partie de boitier formant bac (24) et présentant des emplacements de réception (25) pour lesdits modules (1), chacun desdits emplacements (25) comportant un moyen de régulation thermique (16) soit sous la forme d'une portion de paroi renfoncée formant avec la paroi de fond (8) du corps support (4) d'un module (1) un double fond, soit sous la forme d'une surface d'appui pour la paroi de fond (8) du corps support (4) d'un module de batterie (1), régulée en température, une seconde partie de boitier formant couvercle (24') étant prévue pour réaliser par coopération avec la première partie (24) précitée, un boitier fermé.

21. Procédé de réalisation d'un module de batterie selon l'une quelconque des revendications 1 à 11, **caractérisé en ce qu'**il consiste essentiellement à constituer des sous-modules de batterie (10) en emprisonnant une pluralité d'éléments de batterie (2) entre deux premiers éléments de calage (6) en forme de cadres pourvus de barreaux transversaux (6"), à mettre en place ces sous-modules (10) dans les différents logements allongés (5) d'un corps support (4) profilé à section en forme de peigne, avantageusement avec interposition de bandes élastiquement compressibles et conductrices (13, 14) au niveau des fonds (5') des logements (5), à mettre en place des moyens complémentaire de raccordement électrique des différents éléments de batterie (2), à rapporter au moins un second élément de calage (7) par-dessus les logements allongés (5), lequel vient en engagement avec les premiers éléments de calage (6) et bloque en position les sous-modules (10) dans les logements (5), préférentiellement avec sollicitation sous pression, du fait de la fixation dudit second élément de calage (7) au corps support (4) et/ou de l'appui d'un couvercle (23) recouvrant au moins partiellement ledit corps support (4).

22. Procédé de fabrication d'une batterie (22) selon l'une quelconque des revendications 17 à 20, **caractérisé en ce qu'**il consiste à réaliser un ou plusieurs module(s) de batterie (1) selon l'une quelconque des revendications 1 à 11, en mettant avantageusement en œuvre le procédé selon la revendication 21, et ensuite, en fonction du type de batterie (22) résultante souhaité, à effectuer une des trois séries d'opérations consécutives a), b) ou c) suivantes :
- a) rapporter un moyen de régulation thermique (16) selon l'une des revendications 12 à 16 sur la paroi de fond (8) du corps support (4) d'un module (1) et fermer le contenant (3) de ce module (1) avec un couvercle (23) dont les parois forment un U et sont configurées pour recouvrir les faces ouvertes des logements (5) dudit contenant (3) ;
- b) assembler deux modules (1) par les parois de fond (8) de leurs corps support (4) respectifs avec réalisation d'un moyen de régulation thermique (16) commun et fermer chacun des deux contenants (3) avec un couvercle (23) dont les parois forment un U et sont configurées pour recouvrir les faces ouvertes des logements (5) du contenant (3) du module (1) respectivement concerné;
- c) disposer une pluralité de modules (1) dans une première partie de boitier (24) formant bac, chacun à un emplacement de réception (25) dédié qui, soit comporte un moyen de régulation thermique (16) sous la forme d'une surface d'appui pour la paroi de fond (8) du corps support (4) du module (1) considéré, régulée en température, soit comporte une portion de paroi renfoncée constituant par coopération avec la paroi de fond (8) du corps support (4) du module (1) concerné, un double fond, relié à des moyens de circulation de fluide caloporteur (16') intégrés dans le bac (24), à mettre en place éventuellement les connexions électriques des différents modules entre eux et avec les moyens de raccordement de la batterie (22) et, enfin, à mettre en place et à assembler avec le bac (24) une seconde partie de boitier (24') formant couvercle, les deux parties (24, 24') constituant par coopération un boitier fermé.

## Patentansprüche

1. Elektrisches Modul (1) einer Batterie, insbesondere einer Batterie für ein Kraftfahrzeug, aufweisend eine Vielzahl von einzelnen Akkumulatoren (2) in Form von Batterieelementen oder -zellen von länglicher, vorteilhafterweise zylindrischer Beschaffenheit und vorzugsweise mit kreisförmigem Querschnitt, wobei die Batterieelemente (2) elektrisch miteinander und mit den Anschlussklemmen (1') des Moduls (1) verbunden und in einem Behälter (3) montiert sind, welcher zu dem Modul (1) gehört, wobei der Behälter (3) mindestens einen Aufnahmekörper (4) aufweist, welcher eine Vielzahl von länglichen, zueinander parallelen, in Form von Nuten oder Kanälen ausgestalteten Aufnahmen (5) definiert, um jeweils eine Reihe (Ri) von Batterieelementen (2) mit ihren Längsachsen (AL) senkrecht zu dem Boden (5') der betreffenden Aufnahme (5) aufzunehmen,
wobei das Batteriemodul (1), **dadurch gekennzeichnet ist, dass** der Behälter (3) aufweist:
- erste Verkeilungselemente (6) in Form von durchbrochenen, leiter- oder rahmenförmigen Teilen, aufweisend Holme (6') und Stäbe (6"), welche an und zwischen den Batterieelementen (2) einer Reihe (Ri) und jeder der beiden Seitenwände (5") der sie aufnehmenden länglichen Aufnahme (5) angeordnet sind und von denen jeder Stab (6") zwischen zwei benachbarten Batterieelementen (2) liegt, die er derartig kontaktiert, dass jedes Batterieelement (2) zumindest in der Längsrichtung (DL) seiner länglichen Aufnahme (5) in Bezug auf das erste Verkeilungselement (6) in Position festgelegt ist,
- mindestens ein zweites Verkeilungselement (7), welches oberhalb der länglichen Aufnahmen (5) montiert ist und Vorsprünge (7') umfasst, welche druckbeaufschlagt mit den ersten Verkeilungselementen (6) in Eingriff gelangen, um letztere zu den Böden (5') der länglichen Ausnehmungen (5) und gegen die Batterieelemente (2), die sie paarweise umrahmen, zu drängen.

2. Batteriemodul nach Anspruch 1, **dadurch gekennzeichnet, dass** der Aufnahmekörper (4) aus einem profilierten Teil mit kammförmigem Querschnitt besteht, welches eine Vielzahl von zueinander parallelen und gleichmäßig beabstandeten Unterteilungswänden (5") aufweist und mit einer gemeinsamen Bodenwand (8) die länglichen Aufnahmen (5) bildet.

3. Batteriemodul nach einem der Ansprüche 1 und 2, **dadurch gekennzeichnet, dass** jedes Batterieelement (2) in einer Ebene senkrecht zu seiner Längsachse (AL) zwischen zwei ersten Verkeilungselementen (6) durch zumindest linearen, vorzugsweise flächenbezogenen, Kontakt mit zwei Stabpaaren (6") in Position gehalten wird, wobei jedes Paar zu einem der oben genannten ersten Verkeilungselementen (6) gehört, wobei die Stäbe (6") vorteilhafterweise derartig ausgelegt und eingerichtet sind, dass jedes Batterieelement (2) entfernt einerseits von den beiden gegenüberliegenden Seitenwänden (5") der es aufnehmenden Aufnahme (5) und andererseits von den benachbarten Batterieelementen (2) festgesetzt positioniert ist, und zwar mit jeweils bestimmten Abständen.

4. Batteriemodul nach Anspruch 3, **dadurch gekennzeichnet, dass** jeder Stab (6'') zumindest über einen Teil seiner Länge in durchgehender oder unterbrochener Weise mindestens ein Paar abgeschrägte, ebene oder gekrümmte Kontaktflächen (9, 9') aufweist, die dazu bestimmt sind, mit zwei zu einer Reihe (Ri) benachbarten Batterieelementen (2) in Kontakt zu gelangen.

5. Batteriemodul nach einem der Ansprüche 1 bis 4, **dadurch gekennzeichnet, dass** die oberen und unteren Abschnitte der zwischen den aufeinanderfolgenden Stäben (6") der ersten Verkeilungselemente (6) gelegenen Holme (6') gegebenenfalls mittels gerippter Ränder mit den oberen (2') und unteren (2'') zylindrischen Enden der Batterieelemente (2), gegebenenfalls druckbeaufschlagt und/oder mit elastischer Verformung in Eingriff gelangen, wobei die Batterieelemente (2) mit den zwei ersten Verkeilungselementen (6), die sie festsetzen, untereinander ein leistenförmiges Batterieuntermodul (10) darstellen.

6. Batteriemodul nach einem der Ansprüche 1 bis 5, **dadurch gekennzeichnet, dass** die Vorsprünge (7') des oder jedes zweiten Verkeilungselements (7) sich oberhalb der Seitenwände (5") der länglichen Aufnahmen (5) in Reihen erstrecken, abgefaste oder abgeschrägte Flächen (7") aufweisen und jeweils mit den oberen Holmen (6') der beiderseits der betrachteten Seitenwand (5") gelegenen zwei ersten Verkeilungselemente (6) in Eingriff gelangen, wobei diese Holme (6') vorteilhafterweise komplementäre Stellen (11) aufweisen, die mit den Vorsprüngen (7') zusammenwirken, um ebenfalls eine Festlegung in der Längsrichtung (DL) der länglichen Aufnahmen (5) zwischen den ersten Verkeilungselementen und dem (den) zweiten Verkeilungselement(en) (6, 7) zu verwirklichen.

7. Batteriemodul nach Anspruch 6, **dadurch gekennzeichnet, dass** das oder jedes zweite Verkeilungselement (7) aus einer Gitterplatte besteht, welche Vorsprünge (7') im Bereich der Überschneidungen des Gitters aufweist, wobei diese Vorsprünge (7') vorteilhafterweise eine konische oder kegelstumpfartige Form aufweisen und die komplementären Stellen (11) der Holme (6') der ersten Verkeilungselemente (6) dann aus teilweise kreisförmigen und vorzugsweise jeweils gegenüber einem Stab (6") gelegenen Ausschnitten bestehen.

8. Batteriemodul nach einem der Ansprüche 1 bis 7, **dadurch gekennzeichnet, dass** die mit der Bodenwand (8) des Aufnahmekörpers (4) verbundenen Fußbereiche der Seitenwände (5") der länglichen Aufnahmen (5) im Querschnitt eine in Richtung der gemeinsamen Bodenwand (8) ausgeweitete Form aufweisen und so eine Verbindungszone (12) mit abgeschrägten Flächen (12') bilden, die nämlich in Bezug auf die Böden (5') der Aufnahmen (5) geneigt sind, und dass die unteren Holme (6') der ersten Verkeilungselemente (6) bei Druckbeaufschlagung der Vorsprünge (7') des oder der zweiten Verkeilungselements(e) (7) und gegebenenfalls unter dem Gewicht der Batterieelemente (2), die sie festsetzen oder umrahmen, sich auf diesen abgeschrägten Flächen (12') abstützen und so zu den Batterieelementen (2) gedrängt werden.

9. Batteriemodul nach einem der Ansprüche 1 bis 8, **dadurch gekennzeichnet, dass** die Batterieelemente (2) sich auf den Böden (5') der Aufnahmen (5) abstützen, welche sie durch flexible Bänder (13) aus elastisch komprimierbarem, gut wärmeleitfähigem und vorzugsweise elektrisch isolierendem Material aufnehmen, wobei sich jedes flexible Band (13) über mindestens einen Teil der betreffenden Aufnahme (5) erstreckt, wobei elektrisch leitfähige Leitungen oder Bänder (14), welche zu Mitteln (14') zur elektrischen Verbindung der Batterieelemente (2) untereinander gehören, zwischen den Batterieelementen (2) und den flexiblen Bändern (13) angeordnet sind, indem sie in den Letzteren integriert sind oder nicht.

10. Batteriemodul nach einem der Ansprüche 1 bis 9, **dadurch gekennzeichnet, dass** zumindest die die Böden (5') definierende gemeinsame Bodenwand (8) der verschiedenen langgestreckten Aufnahmen (5) des Aufnahmekörpers (4) und vorzugsweise ebenfalls deren Seitenwände (5") aus einem gut wärmeleitfähigem Material besteht (bestehen), wobei jede langgestreckte Aufnahme (5) im Bereich ihres Bodens (5') eine Ausformung (15) umfasst, welche eine profilierte, vorspringende Fläche definiert und den in der betreffenden Aufnahme (5) aufgenommenen Batterieelementen (2) als Stützsockel dient, und zwar vorteilhafterweise durch ein komprimierbares Band (komprimierbare Bänder), das elektrisch isolierend oder leitfähig (13, 14) und jeweils thermisch leitend ist.

11. Batteriemodul nach einem der Ansprüche 1 bis 10, **dadurch gekennzeichnet, dass** der profilierte Aufnahmekörper (4) vollständig und einstückig aus einem gut wärmeleitfähigem Material, vorteilhafterweise einem metallischen Material, vorzugsweise aus Aluminium oder einer Legierung dieses Letzteren, beispielsweise in Form eines Extrusionsteils, verwirklicht und dass die ersten und das (die) zweite(n) Verkeilungselement(e) (6, 7) aus Kunststoffspritzteilen bestehen.

12. Batteriemodul nach einem der Ansprüche 1 bis 11, **dadurch gekennzeichnet, dass** die Böden (5') der verschiedenen langgestreckten Aufnahmen (5) der Aufnahmekörper (4), die gegebenenfalls eine gemeinsame Bodenwand (15) bilden, der Einwirkung eines Wärmeregulierungsmittels (16), beispielsweise vom Typ Zirkulation von Wärmeträgerfluid (16'), unterworfen sind, wobei dieses Wärmeregulierungsmittel (16) entweder auf den Aufnahmekörper (4) des Moduls (1) aufgebracht ist, indem es einem Modul (1) eignen ist oder zwischen zwei Modulen (1) geteilt wird, oder dem Modul (1) durch Kontakt, feste Verbindung oder Zusammenwirkung zugeordnet ist, indem es zu einer mehreren Modulen (1) gemeinsamen Gesamtheit von Wärmeregulierungsmitteln gehört.

13. Batteriemodul nach einem der Ansprüche 1 bis 12, **dadurch gekennzeichnet, dass** die Seitenwände (5'') der langgestreckten Aufnahmen (5) an ihren beiden gegenüberliegenden Seiten eine nicht ebene Oberflächenstruktur (17), beispielsweise ein Muster von Rippen/Rillen oder profilierten Wellen, aufweisen.

14. Batteriemodul nach Anspruch 12, **dadurch gekennzeichnet, dass** das dem Modul (1) eigene Wärmeregulierungsmittel (16) eine Wand (18), vorzugsweise aus einem isolierenden oder zumindest schwach wärmeleitfähigen Material, aufweist, welche an der Außenseite der gemeinsamen Bodenwand (8) des Aufnahmekörpers (4) aufgebracht ist und durch Zusammenwirkung mit dieser Letzteren einen undurchlässigen Doppelboden (19) bildet, wobei Mittel (20, 20') zum Zuführen und Abführen von Wärmeträgerflüssigkeit (16') in dem Innenvolumen des Doppelbodens (19) in der aufgebrachten Wand (18) integriert oder durch ihren Zusammenbau mit der gemeinsamen Bodenwand (8) des Aufnahmekörpers (4) gebildet sind.

15. Batteriemodul nach Anspruch 14, **dadurch gekennzeichnet, dass** das Innenvolumen des Doppelbodens (19) einen oder mehrere Weg(e) zur Zirkulation des Wärmeträgerfluids (16') zwischen einem Eintrittsanschluss (20) und einem Austrittsanschluss (20') aufweist, wobei dieser (diese) Weg(e) entweder nur durch in die aufgebrachte Wand (18) des Doppelbodens (19) integrierte Ausformungen (18') oder durch Zusammenwirkung von gegenseitig komplementären Ausformungen, die jeweils an der gemeinsamen Bodenwand (8) und an der aufgebrachten Wand (18) vorhanden sind, gebildet ist (sind).

16. Batteriemodul nach Anspruch 14 oder 15, **dadurch gekennzeichnet, dass** der profilierte Aufnahmekörper (4) entlang der lateralen Seiten der gemeinsamen Bodenwand (8) nach außen vorspringende Kanten (21) umfasst und dass die mit der gemeinsamen Bodenwand (8) den Doppelboden (19) bildende aufgebrachte Wand (18) mit dem Aufnahmekörper (4) im Bereich der Kanten (21) fest verbunden ist, beispielsweise durch Einrastmittel (21'), Schraubmittel oder analogen mechanischen Zusammenbau.

17. Batterie (22) für ein Kraftfahrzeug, insbesondere für ein Hybrid- oder Elektrofahrzeug, **dadurch gekennzeichnet, dass** sie mindestens ein Batteriemodul (1) nach einem der Ansprüche 1 bis 16 aufweist.

18. Batterie nach Anspruch 17, **dadurch gekennzeichnet, dass** sie ein einziges Batteriemodul (1), welches vorzugsweise mit einem Wärmeregulierungsmittel nach einem der Ansprüche 14 bis 16 vorgesehen ist, sowie einen vorteilhafterweise durchbrochenen Deckel (23) aus vorzugsweise einem elektrischen Isoliermaterial, wie beispielsweise ein Kunststoff oder dergleichen, aufweist, dessen Wände ein U formen und ausgelegt sind, die offenen Flächen der langgestreckten Aufnahmen (5) des Aufnahmekörpers (4) des Moduls (1) abzudecken, um mit dem Behälter (3) einen durchgehenden Außenmantel und einen geschlossenen Raum zu bilden, in welchem die Batterieelemente (2) mit mechanischer Verriegelung in Position gehalten sind.

19. Batterie nach Anspruch 17, **dadurch gekennzeichnet, dass** sie zwei Batteriemodule (1), die unter beabstandeter Gegenüberstellung ihrer jeweiligen Bodenwände (8) und Schaffung eines ein gemeinsames Wärmeregulierungsmittel (16) mit Eintritts- und Austrittsanschlüssen (20, 20') bildenden Volumens (19') zur Zirkulation von Wärmeträgerfluid (16') zwischen ihnen zusammengefügt sind, sowie vorteilhafterweise zwei Deckel (23) aufweist, deren Wände jeweils ein U formen und ausgelegt sind, die offenen Flächen der länglichen Aufnahmen (3) eines der beiden Aufnahmekörper (1) abzudecken, um mit den beiden Behältern (3) zwei geschlossene und gegenseitig aneinandergefügte Räume zu bilden, in welchen die Batterieelemente (2) mit mechanischer Verriegelung in Position gehalten sind.

20. Batterie nach Anspruch 17, **dadurch gekennzeichnet, dass** sie mindestens zwei, vorzugsweise mehrere, Batteriemodule (1) aufweist, welche in einem ersten Gehäuseteil angeordnet sind, das eine Wanne (24) bildet und Aufnahmeplätze (25) für die Module (1) aufweist, wobei jeder der Aufnahmeplätze (25) ein Wärmeregulierungsmittel (16) entweder in Form eines mit der Bodenwand (8) des Aufnahmekörpers (4) eines Moduls (1) einen Doppelboden bildenden vertieften Wandabschnitts oder in Form einer temperaturgeregelten Auflagefläche für die Bodenwand (8) des Aufnahmekörpers (4) eines Batteriemoduls (1), wobei ein einen Deckel (24') bildender zweiter Gehäuseteil vorgesehen ist, um durch Zusammenwirkung mit dem oben genannten ersten Teil (24) ein geschlossenes Gehäuse zu verwirklichen.

21. Verfahren zur Verwirklichung eines Batteriemoduls nach einem der Ansprüche 1 bis 11, **dadurch gekennzeichnet, dass** es im Wesentlichen darin besteht, Batterieuntermodule (10) zu bilden, indem eine Vielzahl von Batterieelementen (2) zwischen zwei ersten Verkeilungselementen (6) in Form von Rahmen mit Querstäben (6") festgesetzt wird, diese Untermodule (10) in den verschiedenen länglichen Aufnahmen (5) eines profilierten Aufnahmekörpers (4) mit kammförmigem Querschnitt, vorzugsweise mit Einfügung von elastisch kompressiblen und leitfähigen Bändern (13, 14) im Bereich der Böden (5') der Aufnahmen (5) einzubringen, komplementäre elektrische Verbindungsmittel der verschiedenen Batterieelemente (2) einzurichten, mindestens ein zweites Verkeilungselement (7) von oberhalb der länglichen Aufnahmen (5) aufzubringen, welches mit den ersten Verkeilungselementen (6) in Eingriff gelangt und die Untermodule (10) in den Aufnahmen (5), vorzugsweise mit Druckbeaufschlagung, in Position verriegelt, aufgrund der Befestigung des zweiten Verkeilungselements (7) an dem Aufnahmekörper (4) und/oder der Abstützung eines den Aufnahmekörper (4) zumindest teilweise abdeckenden Deckels (23).

22. Verfahren zur Verwirklichung einer Batterie (22) nach einem der Ansprüche 17 bis 20, **dadurch gekennzeichnet, dass** es darin besteht, ein oder mehrere Batteriemodul (e) (1) nach einem der Ansprüche 1 bis 11 zu verwirklichen, indem vorteilhafterweise das Verfahren nach Anspruch 21 eingesetzt wird, und dann in Abhängigkeit des gewünschten Typs der resultierenden Batterie (22) eine der folgenden drei aufeinanderfolgenden Reihen von Arbeitsgängen a), b) oder c) durchzuführen:
- a) Aufbringen eines Wärmeregulierungsmittels (16) nach einem der Ansprüche 12 bis 16 auf der Bodenwand (8) des Aufnahmekörpers (4) eines Moduls (1) und Schließen des Behälters (3) dieses Moduls (1) mit einem Deckel (23), dessen Wände ein U bilden und ausgelegt sind, die offenen Seiten der Aufnahmen (5) des Behälters (3) abzudecken;
- b) Zusammenfügen zweier Module (1) über die Bodenwände (8) ihrer jeweiligen Aufnahmekörper (4) unter Verwirklichung eines gemeinsamen Wärmeregulierungsmittels (16) und Schließen jedes der beiden Behälter (3) mit einem Deckel (23), dessen Wände ein U bilden und ausgelegt sind, die offenen Seiten der Aufnahmen (5) des Behälters (3) des betreffenden Moduls (1) jeweils abzudecken;
- c) Anordnen einer Mehrzahl von Modulen (1) in einem ersten eine Wanne bildenden Gehäuseteil (24) jeweils an einem speziellen Aufnahmeplatz (25), der entweder ein Wärmeregulierungsmittel (16) in Form einer temperaturgeregelten Auflagefläche für die Bodenwand (8) des Aufnahmekörpers (4) des betreffenden Moduls (1) umfasst, oder einen vertieften Wandabschnitt umfasst, der durch Zusammenwirkung mit der Bodenwand (8) des Aufnahmekörpers (4) des betreffenden Moduls (1) einen Doppelboden bildet, welcher mit in der Wanne (24) integrierten Mitteln zur Zirkulation von Wärmeträgerfluid (16') verbunden ist, möglicherweise Einrichten der elektrischen Verbindungen der verschiedenen Module untereinander und mit den Verbindungsmitteln der Batterie (22) und schließlich Aufbringen und Zusammenfügen eines einen Deckel bildenden zweiten Gehäuseteils (24') mit der Wanne (24), wobei die beiden Teile (24, 24') durch Zusammenwirkung ein geschlossenes Gehäuse bilden.

## Claims

1. Electric battery module (1), in particular motor vehicle battery module, comprising a plurality of individual accumulators (2) in the form of battery elements or cells, of elongate, advantageously cylindrical, shape, preferably with a circular section, these battery elements (2) being connected electrically together and to the connection terminals (1') of the module (1) and mounted in a container (3) forming part of said module (1), said container (3) comprising at least one support body (4) that defines a plurality of mutually parallel elongate housings (5) that are configured in the form of grooves or channels each for receiving a row (Ri) of battery elements (2) with their longitudinal axes (AL) perpendicular to the bottom (5') of the particular housing (5),
the battery module (1) being **characterized in that** said container (3) comprises:
- first wedging elements (6) in the form of ladder- or frame-like perforated components that comprise side members (6') and crossmembers (6"), disposed against and between the battery elements (2) of a row (Ri) and each of the two lateral walls (5") of the elongate housing (5) receiving them, wherein each crossmember (6") is situated between two adjacent battery elements (2) with which it is in contact, such that each battery element (2) is fixed in position at least in the longitudinal direction (DL) of its elongate housing (5) with respect to said first wedging elements (6),
- at least one second wedging element (7) that is mounted above the elongate housings (5) and has projections (7') that engage under pressure with the first wedging elements (6) so as to urge the latter towards the bottoms (5') of said elongate housings (5) and against the battery elements (2) that they frame in pairs.

2. Battery module according to Claim 1, **characterized in that** the support body (4) consists of a profiled component of comb-shaped cross section, comprising a plurality of parallel compartmentalizing walls (5") that are regularly spaced apart from one another and form, with a common bottom wall (8), the elongate housings (5).

3. Battery module according to either one of Claims 1 and 2, **characterized in that** each battery element (2) is, in a plane perpendicular to its longitudinal axis (AL), kept in position between two first wedging elements (6) by at least linear, preferably surface, contact with two pairs of crossmembers (6"), each pair belonging to one of said abovementioned first wedging elements (6), said crossmembers (6") being advantageously configured and arranged such that each battery element (2) is positioned fixedly at a distance, for the one part, from two opposite lateral walls (5") of the housing (5) that receives it and, for the other part, from the adjacent battery elements (2), with respective determined spacings.

4. Battery module according to Claim 3, **characterized in that** each crossmember (6") has, along at least a part of its length, continuously or discontinuously, at least one pair of bevelled, flat or curved, contact surfaces (9, 9') that are intended to come into contact with two adjacent battery elements (2) of a row (Ri).

5. Battery module according to any one of Claims 1 to 4, **characterized in that** those portions of upper and lower side members (6') that are situated between the successive crossmembers (6") of the first wedging elements (6) engage, as the case may be via ribbed edges, with the upper end (2') and lower end (2") of the cylindrical battery elements (2), as the case may be under pressure and/or with elastic deformation, said battery elements (2) forming, with the two first wedging elements (6) that confine them between one another, a battery sub-module (10) in the form of a block.

6. Battery module according to any one of Claims 1 to 5, **characterized in that** the projections (7') of the or of every second wedging element (7) extend in rows above the lateral walls (5") of the elongate housings (5), have chamfered or bevelled surfaces (7") and each come into engagement with the upper side members (6') of the two first wedging elements (6) situated on either side of the particular lateral wall (5''), these side members (6') advantageously having complementary sites (11) that cooperate with said projections (7') so as to likewise effect fixing in the longitudinal direction (DL) of the elongate housings (5) between said first wedging elements and second wedging element(s) (6, 7) .

7. Battery module according to Claim 6, **characterized in that** the or every second wedging element (7) consists of a meshwork plate having projections (7') at the intersections of the mesh, these projections (7') advantageously having a conical or frustoconical shape and the complementary sites (11) of the side members (6') of the first wedging members (6) then consisting of partially circular cutouts that are preferably each situated facing a crossmember (6") .

8. Battery module according to any one of Claims 1 to 7, **characterized in that** the bases of the lateral walls (5") of the elongate housings (5), said bases being connected to the bottom wall (8) of the support body (4), have, in cross section, a shape that flares in the direction of the common bottom wall (8), thereby forming a junction zone (12) with bevelled surfaces (12'), i.e. surfaces that are inclined with respect to the bottoms (5') of the housings (5), and **in that** the lower side members (6') of the first wedging elements (6) come to bear, under the pressure of the projections (7') of the second wedging element(s) (7), and as the case may be under the weight of the battery elements (2) that they confine or frame, against the bevelled surfaces (12'), and are thus urged towards said battery elements (2).

9. Battery module according to any one of Claims 1 to 8, **characterized in that** the battery elements (2) come to bear against the bottoms (5') of the housings (5) that receive them via flexible strips (13) of elastically compressible material, which is a good conductor of heat and preferably an electrical insulator, each flexible strip (13) extending over at least a part of the particular housing (5), electrically conductive lines or strips (14) that form part of the means (14') for electrically connecting the battery elements (2) together being disposed between said battery elements (2) and said flexible strips (13), in a manner integrated or not integrated with the latter.

10. Battery module according to any one of Claims 1 to 9, **characterized in that** at least the common bottom wall (8) defining the bottoms (5'), of the different elongate housings (5) of the support body (4) and preferably also their lateral walls (5"), is (are) made of a material that is a good conductor of heat, each elongate housing (5) having, at its bottom (5'), a formation (15) that defines a profiled protruding surface that serves as a support base for the battery elements (2) received in the particular housing (5), advantageously via (a) compressible strip(s) (13, 14) that is/are electrically insulating or conductive, respectively, and thermally conductive.

11. Battery module according to any one of Claims 1 to 10, **characterized in that** the profiled support body (4) is made entirely and in one piece from a material that is a good conductor of heat, advantageously a metal material, preferably aluminium or an alloy of the latter, for example in the form of an extruded component, and **in that** the first wedging elements and second wedging element(s) (6, 7) consist of components injection-moulded from plastics material.

12. Battery module according to any one of Claims 1 to 11, **characterized in that** the bottoms (5') of the different elongate housings (5) of the support body (4), which, as the case may be, form a common bottom wall (15), are subjected to the action of a thermal control means (16), for example of the type involving the circulation of a heat-transfer fluid (16'), this thermal control means (16) either being attached to the support body (4) of the module (1), **in that** it belongs to one module (1) or is shared between two modules (1), or being associated with said module (1) by being in contact therewith, being secured thereto or cooperating therewith, **in that** it belongs to a set of thermal control means common to several modules (1).

13. Battery module according to any one of Claims 1 to 12, **characterized in that** the lateral walls (5") of the elongate housings (5) have, on their two opposite faces, a non-flat surface structure (17), for example a pattern of ribs/grooves or profiled undulations.

14. Battery module according to Claim 12, **characterized in that** the thermal control means (16) that belongs to said module (1) comprises a wall (18), preferably made of a material that is an insulator or at least a slight conductor of heat, that is attached to the external face of the common bottom wall (8) of the support body (4) and forms, by cooperation therewith, a sealed double bottom (19), means (20, 20') for feeding heat-transfer liquid (16') into the interior volume of the double bottom (19) and discharging it therefrom being integrated into said attached wall (18) or formed by being joined to the common bottom wall (8) of the support body (4).

15. Battery module according to Claim 14, **characterized in that** the internal volume of the double bottom (19) comprises one or more path(s) for the heat-transfer fluid (16') to circulate between an inlet port (20) and an outlet port (20'), this/these path(s) being formed either only by formations (18') integrated into the attached wall (18) of the double bottom (19) or by cooperation of mutually complementary formations present respectively on the common bottom wall (8) and on the attached wall (18) .

16. Battery module according to Claim 14 or 15, **characterized in that** the profiled support body (4) has, along the lateral sides of the common bottom wall (8), outwardly protruding lips (21), and **in that** the attached wall (18), which forms the double bottom (19) with the common bottom wall (8), is secured to said support body (4) at said lips (21), for example by clip-fastening means (21'), by screw means or by similar mechanical assembly means.

17. Battery (22) for a motor-driven vehicle, in particular for a hybrid or electric motor vehicle, **characterized in that** it comprises at least one battery module (1) according to any one of Claims 1 to 16.

18. Battery according to Claim 17, **characterized in that** it comprises a single battery module (1), preferably provided with a thermal control means according to one of Claims 14 to 16, and a cover (23), which is advantageously perforated and preferably made of an electrically insulating material, such as plastic or the like, the walls of which form a U shape and are configured to cover the open faces of the elongate housings (5) of the support body (4) of the module (1), so as to form, with the container (3), a continuous outer shell and a closed enclosure in which the battery elements (2) are held in a manner locked mechanically in position.

19. Battery according to Claim 17, **characterized in that** it comprises two battery modules (1) that are joined together with their respective bottom walls (8) facing one another in a spaced-apart manner and a volume (19') for heat-transfer fluid (16') to circulate in being created in between, forming a common thermal control means (16) with inlet and outlet ports (20, 20'), and advantageously two covers (23), the walls of which each form a U shape and are configured to cover the open faces of the elongate housings (3) of one of the two support bodies (1), so as to form, with the two containers (3), two closed, side-by-side enclosures in which the battery elements (2) are held in a manner locked in position.

20. Battery according to Claim 17, **characterized in that** it comprises at least two, preferably several, battery modules (1) disposed in a first casing part forming a tray (24) and having receiving locations (25) for said modules (1), each of said locations (25) having a thermal control means (16) either in the form of an indented wall portion that forms a double bottom with the bottom wall (8) of the support body (4) of a module (1), or in the form of a support surface for the bottom wall (8), which is temperature controlled, of the support body (4) of a battery module (1), a second casing part forming a cover (24') being provided to create, by cooperation with the abovementioned first part (24), a closed casing.

21. Method for producing a battery module according to any one of Claims 1 to 11, **characterized in that** it consists essentially in forming battery sub-modules (10) by confining a plurality of battery elements (2) between two first wedging elements (6) in the form of frames provided with transverse crossmembers (6"), in fitting these sub-modules (10) in the different elongate housings (5) of a profiled support body (4) having a comb-shaped section, advantageously with elastically compressible and conductive strips (13, 14) being interposed at the bottoms (5') of the housings (5), in fitting complementary means for electrically connecting the different battery elements (2), in attaching at least one second wedging element (7) above the elongate housings (5), this engaging with the first wedging elements (6) and locking the sub-modules (10) in position in the housings (5), preferably with pressurization, on account of said second wedging element (7) being fixed to the support body (4) and/or of the bearing of a cover (23) at least partially covering said support body (4).

22. Method for manufacturing a battery (22) according to any one of Claims 17 to 20, **characterized in that** it consists in producing one or more battery module (s) (1) according to any one of Claims 1 to 11, advantageously by implementing the method according to Claim 21, and then, depending on the desired type of resultant battery (22), in carrying out one of the three following sets of consecutive operations a), b) or c):
- a) attaching a thermal control means (16) according to one of Claims 12 to 16 to the bottom wall (8) of the support body (4) of a module (1) and closing the container (3) of this module (1) with a cover (23), the walls of which form a U shape and are configured to cover the open faces of the housings (5) of said container (3);
- b) joining together two modules (1) by way of the bottom walls (8) of their respective support bodies (4), with the production of a common thermal control means (16), and closing each of the two containers (3) with a cover (23), the walls of which form a U shape and are configured to cover the open faces of the housings (5) of the container (3) of the particular module (1) in each case;
- c) disposing a plurality of modules (1) in a first casing part (24) forming a tray, each in a dedicated receiving location (25) which either has a thermal control means (16) in the form of a support surface for the bottom wall (8), which is temperature controlled, of the support body (4) of the particular module (1), or has an indented wall portion forming a double bottom by cooperation with the bottom wall (8) of the support body (4) of the particular module (1), said double bottom being connected to means for heat-transfer fluid (16') to circulate in which are integrated in the tray (24), in optionally installing the electrical connections of the various modules to one another and to the connecting means of the battery (22), and, finally, in fitting and joining to the tray (24) a second casing part (24') forming a cover, the two parts (24, 24') forming a closed casing by cooperation.
